# EUROPÄISCHE PATENTSCHRIFT

(11) **EP 2 012 938 B1**
(45) Veröffentlichungstag und Bekanntmachung des Hinweises auf die Patenterteilung: **27.06.2012**
(21) Anmeldenummer: 07728318.2
(22) Anmeldetag: 19.04.2007
(51) Int. Cl.: B01D 69/02, B05D 5/08, C09D 5/00, C09D 5/14, B01D 67/00, B05D 7/24, C09D 5/08

(54) **FLEXIBLE PLASMAPOLYMERE PRODUKTE, ENTSPRECHENDE ARTIKEL UND VERWENDUNG**
FLEXIBLE PLASMA POLYMER PRODUCTS, CORRESPONDING ITEMS AND USE THEREOF
PPRODUITS POLYMERES DE PLASMA FLEXIBLES, ARTICLES ET UTILISATION Y AFFERENTS

(30) Priorität: 19.04.2006 DE 102006018491
(43) Veröffentlichungstag der Anmeldung: 14.01.2009
(73) Patentinhaber: Fraunhofer-Gesellschaft zur Förderung der angewandten Forschung e.V., 80686 München (DE)
(72) Erfinder: VISSING, Klaus-Dieter, 27321 Morsum (DE); NEESE, Gabriele, 28215 Bremen (DE); OTT, Matthias, 21255 Dohren (DE)
(74) Vertreter: Dorff, Gernot Peter Roderich
(86) Internationale Anmeldenummer: PCT/EP2007/053859
(87) Internationale Veröffentlichungsnummer: WO 2007/118905

(56) Entgegenhaltungen:
- WO-A-99/04911
- WO-A-03/002269
- WO-A-2005/110626

## Beschreibung

Die vorliegende Erfindung betrifft Artikel, die aus einem plasmapolymeren Produkt bestehen oder ein solches plasmapolymeres Produkt umfassen; die Erfindung betrifft zudem die Verwendung entsprechender (erfindungsgemäßer) plasmapolymerer Produkte, Verfahren zur Herstellung entsprechender plasmapolymerer Produkte sowie plasmapolymere Produkte, die gemäß einem erfindungsgemäßen Verfahren herstellbar sind.

Die erfindungsgemäßen plasmapolymeren Produkte (als erfindungsgemäße Artikel oder dessen Bestandteil) bestehen aus Kohlenstoff, Silicium, Sauerstoff und Wasserstoff sowie gegebenenfalls üblichen Verunreinigungen.

Ein "plasmapolymeres Produkt" ist dabei ein Produkt, welches mittels Plasmapolymerisation herstellbar ist. Plasmapolymerisation ist ein Verfahren, bei dem sich gasförmige Precursor (oft auch Monomere genannt), angeregt durch ein Plasma, auf einem frei wählbaren Substrat als hochvernetzte Schicht niederschlagen. Voraussetzung für eine Plasmapolymerisation ist das Vorhandensein von kettenbildenden Atomen wie Kohlenstoff und Silicium im Arbeitsgas. Durch die Anregung werden die Moleküle der gasförmigen Substanz, durch den Beschuss mit Elektronen und/oder energiereichen Ionen fragmentiert. Dabei entstehen hochangeregte radikalische oder ionische Molekülfragmente, die miteinander im Gasraum reagieren und auf der zu beschichtenden Oberfläche abgeschieden werden. Auf diese abgeschiedene Schicht wirkt die elektrische Entladung des Plasmas und dessen intensiver Ionen- und Elektronenbeschuss fortwährend ein, so dass in der abgeschiedenen Schicht weitere Reaktionen ausgelöst und eine hochgradige Verknüpfung der abgeschiedenen Moleküle erzielt werden kann.

Im Rahmen des vorliegenden Textes umfasst der Begriff "plasmapolymeres Produkt" auch Produkte, die mittels plasmaunterstützter CVD (PE-CVD) hergestellt werden bzw. wurden. Hierbei wird zur Reaktionsführung das Substrat zusätzlich erwärmt. So lassen sich beispielsweise aus Silan und Sauerstoff SiO₂-Beschichtungen herstellen. Ferner sei ausdrücklich erwähnt, dass auch Atmosphärendruckplasmaverfahren zur Herstellung des erfindungsgemäßen Produktes verwendet werden können, wenngleich Niederdruck-Plasmapolymerisationsverfahren derzeit bevorzugt sind.

Artikel mit einer plasmapolymeren Beschichtung sind bereits seit längerem bekannt. Insbesondere verwiesen sei an dieser Stelle auf das Dokument DE 101 31 156 A1 (Fraunhofer-Gesellschaft), welches einen Artikel mit einer plasmapolymeren Beschichtung betrifft, die besonders leicht zu reinigen ist (Easy-to-clean-Beschichtung).

Weitere Dokumente aus dem Stand der Technik sind: US 5,230,929 A; WO 99/22878; EP 9 609 58 A2; DE 100 56 564 A1; EP 1 123 991 A2; EP 1 260 606 A2; DE 100 47 124 A1 sowie die weiteren in der DE 101 31 156 A1 genannten Dokumente.

Das Dokument WO-A-03/002269 beschreibt ein mittels Plasmapolymerization mit einer polymeren Beschichtung umfassend Silizium, Kohlenstoff und Wasserstoff, versehenes Substrat.

Die plasmapolymeren Beschichtungen gemäß DE 101 31 156 A1 sind als Easy-to-clean-Beschichtungen hervorragend geeignet. Ebenso wie die sonstigen aus dem Stand der Technik bekannten plasmapolymeren Beschichtungen besitzen sie jedoch nur eine sehr geringe Elastizität und Flexibilität. Bei mechanischer Belastung (insbesondere Biegung oder Dehnung) kommt es daher zu unerwünschten Rissen in der plasmapolymeren Beschichtung, welche die mechanischen Eigenschaften und insbesondere deren Gebrauchseigenschaften der plasmapolymeren Beschichtungen insgesamt nachteilig beeinflussen.

Es war daher die Aufgabe der vorliegenden Erfindung, einen Artikel, umfassend oder bestehend aus einem plasmapolymeren, dreidimensional vernetzten Produkt anzugeben, wobei das plasmapolymere Produkt eine besonders hohe Flexibilität und elastische Dehnbarkeit im Vergleich mit den bisher bekannten plasmapolymeren Produkten besitzt, die aus Kohlenstoff, Silicium, Sauerstoff und Wasserstoff bestehen. Dabei sollte die Bildung so genannter oligomerer Produkte (Schichten die einen zähen, öligen Charakter aufweisen), wie sie in der Literatur häufig beschrieben werden, vermieden werden, um Gebrauchsfähigkeit im Sinne der Aufgabenstellung zu erreichen und eine sinnvolle Anbindung an Oberflächen, insbesondere plasmapolymere Oberflächen zu gewährleisten.

Vorzugsweise sollten die anzugebenden plasmapolymeren Beschichtungen dabei auch in den selben Anwendungsbereichen eingesetzt werden können, wie die bislang bekannten plasmapolymeren Beschichtungen, also z. B. als kratzresistente Beschichtung, als Korrosionsschutzbeschichtung, als antihaftende, schmutzabweisende Beschichtung oder als Barrierebeschichtung.

Erfindungsgemäß wird die gestellte Aufgabe gelöst durch einen Artikel umfassend oder bestehend aus einem plasmapolymeren Produkt, bestehend aus Kohlenstoff, Silicium, Sauerstoff und Wasserstoff sowie gegebenenfalls üblichen Verunreinigungen, wobei im ESCA-Spektrum (ESCA - Electron Spectroscopy for Chemical Analysis; oft auch XPS-Untersuchung genannt, XPS = Xray Photoelectron Spectroscopy) des plasmapoymeren Produktes des plasmapolymeren Produktes, bei Kalibrierung auf den aliphatischen Anteil des C 1s Peaks bei 285,00 eV, im Vergleich mit einem trimethylsiloxy-terminierten Polydimethylsiloxan (PDMS) mit einer kinematischen Viskosität von 350 mm²/s bei 25 °C und einer Dichte von 0,97 g/mL bei 25 °C, der Si 2p Peak einen Bindungsenergiewert besitzt, der um maximal 0,44 eV (vorzugsweise maximal 0,40 eV, besonders bevorzugt maximal 0,30 eV) zu höheren oder niedrigeren Bindungsenergien verschoben ist, also beispielsweise bei einem Si 2p Peak des PDMS von 102,69 eV einen Bindungsenergiewert besitzt, der im Bereich von 102,23 bis 103,13 eV liegt, und
der O 1s Peak einen Bindungsenergiewert besitzt, der um maximal 0,50 eV (vorzugsweise maximal 0,40, besonders bevorzugt 0,30) zu höheren oder niedrigeren Bindungsenergien (vorzugsweise zu höheren Bindungsenergien) verschoben ist, also beispielsweise bei einem O 1s Peak des PDMS von 532,46 eV einen Bindungsenergiewert besitzt, der im Bereich von 531,96 bis 532,96 eV liegt.

Ein trimethylsiloxy-terminiertes Polydimethylsiloxan (PDMS) mit einer kinematischen Viskosität von 350 mm²/s bei 25 °C und einer Dichte von 0,970 g/mL bei 25 °C ist das Produkt DMS-T23E der Firma Gelest.

Dabei wurde die Kalibrierung des Messgerätes -wie erwähnt- so vorgenommen, dass der aliphatische Anteil des C 1s Peaks bei 285,00 eV liegt. Aufgrund von Aufladungseffekten wird es in der Regel notwendig sein, die Energieachse ohne weitere Modifikation auf diesen Fixwert zu verschieben.

Zu einer erfindungsgemäß bevorzugten Methode zur Durchführung der ESCA-Untersuchung vergleiche Beispiel 4 weiter unten.

Plasmapolymere Produkte (als erfindungsgemäßer Artikel oder Bestandteil eines solchen Artikels) mit den angegebenen Werten für die Bindungsenergielagen zeichnen sich durch einen besonders hohen Anteil von Siliciumatomen aus, welche mit genau zwei Sauerstoffatomen verknüpft sind. Gleichzeitig ist der Anteil an Siliciumatomen, die mit drei oder vier Sauerstoffatomen verknüpft sind besonders gering. Der besonders hohe Anteil an Siliciumatomen mit zwei benachbarten Sauerstoffatomen ("sekundäres Silicium") im Vergleich zu Siliciumatomen mit drei bzw. vier benachbarten Sauerstoffatomen ("tertiäres" bzw. "quartäres" Silicium) bedeutet, dass der Anteil dreidimensionaler Vernetzung im erfindungsgemäßen plasmapolymeren Produkt (als solches oder als Bestandteil eines erfindungsgemäßen Artikels) im Vergleich mit herkömmlichen plasmapolymeren Produkten reduziert, aber gleichwohl vorhanden ist. Gleichzeitig ist der Anteil unverzweigter Ketten(-abschnitte) erhöht. Vermutlich ist dies die Ursache für die erhöhte Elastizität und Flexibilität der erfindungsgemäßen plasmapolymeren Produkte.

Ein erfindungsgemäßes plasmapolymeres Produkt (als erfindungsgemäßer Artikel oder Bestandteil eines solchen Artikels) besitzt regelmäßig die folgenden Eigenschaften:
Spezifische Wärmeleitfähigkeit: ca. 0,2 W / °K m
Linearer Wärmeausdehnungskoeffizient im Bereich 0-150°C: ca. 2,5 × 10⁻⁴ m/mK
Brechungsindex bei 25°C: ca. 1,5 bei 250 nm bis 1,425 bei 895 nm
Dynamische Kontaktwinkel: (vermessen bei wachsendem Tropfen auf Si-Wafern bei 23°C an Luft)
ca. 102° für Wasser
ca. 86° für Dijodmethan
ca. 80,5 ° für Ethylenglycol
Spezifische Wärmekapazität: ca. 1,55 J / g K
Durchschlagsfestigkeit: ca. 23 kV / mm
Spezifischer Durchgangswiderstand: > 10¹⁴ Q cm bei 23°C
Dielektrizitätszahl: ca 3 εᵣ bei 23°C, 50 Hz
Dielektischer Verlustfaktor: ca. 50 x 10⁻⁴ tan δ
Dichte: 0,9 bis 1,15g/cm³

Sowohl die spektroskopischen Daten (insbesondere die Bindungsenergielagen gemäß ESCA-Analyse sowie die Detailauswertung von FTIR-Spektren - Der Vergleich der FTIR-Spektren zeigt für das erfindungsgemäße Produkt einen gegenüber Easy-to-clean Beschichtungen herabgesetzten Anteil an CH₂-Schwingungsbanden -) als auch die mechanischen Eigenschaften der erfindungsgemäßen plasmapolymeren Produkte (als erfindungsgemäßer Artikel bzw. Bestandteil eines solchen Artikels) unterscheiden sich deutlich von denen der Beschichtungen gemäß DE 101 31 156 A1. Vergleiche zu den ESCA-Daten auch die tabellarische Übersicht (Tabelle 1) weiter unten.

Für ein ganz besonders bevorzugtes erfindungsgemäßes plasmapolymeres Produkt sind die Bindungsenergielagen weiter unten tabellarisch angegeben (siehe Tabelle 1).

Die für das erfindungsgemäße plasmapolymere Produkt angegebenen Bindungsenergielagen (bzw. -verschiebungen) stehen im Zusammenhang mit den Stoffmengenverhältnissen und den Anteilen der anwesenden Elemente im plasmapolymeren Produkt.

Regelmäßig gilt für die Stoffmengenverhältnisse in dem erfindungsgemäßen plasmapolymeren Produkt (als erfindungsgemäßer Artikel oder Bestandteil eines solchen Artikels):

| | | |
|---|---|---|
| 0,75 | < n(O) : n(Si) < | 1,25 |
| 1,50 | < n(C) : n(Si) < | 2,50 |
| 1,50 | < n(C) : n(O) < | 2,50 |
| 2,25 | < n(H) : n(C) < | 3,00. |

Vorzugsweise gilt für die Stoffmengenverhältnisse in dem plasmapolymeren Produkt jedoch:

| | | |
|---|---|---|
| 1,00 | < n(O) : n(Si) < | 1,25 |
| 2,00 | < n(C) : n(Si) < | 2,50 |
| 1,60 | < n(C) : n(O) < | 2,30 |
| 2,40 | < n(H) : n(C) < | 3,00. |

Ganz besonders gilt für die Stoffmengenverhältnisse in dem plasmapolymeren Produkt:

| | | |
|---|---|---|
| 1,05 | < n(O) : n(Si) < | 1,23 |
| 2,10 | < n(C) : n(Si) < | 2,23 |
| 1,70 | < n(C) : n(O) < | 2,00 |
| 2,60 | < n(H) : n(C) < | 3,00. |

Hierbei beziehen sich die Stoffmengenverhältnisse aller Atompaarungen ohne Wasserstoff auf ESCA-Messungen bei Einstellungen, welche für ein wiederum als Standard eingesetztes trimethylsiloxy-terminiertes Polydimethylsiloxan (PDMS) mit einer kinematischen Viskosität von 350 mm²/s bei 25 °C und einer Dichte von 0,97 g/mL bei 25 °C Stoffmengenverhältnisse von n(O) : n(Si) = 1,02, n(C) : n(Si) = 2,35 und n(C) : n(O) = 2,29 ergeben. Das Verhältnis zwischen Wasserstoff und Kohlenstoff bezieht sich auf Ergebnisse der klassischen chemischen Elementaranalyse.

Hinsichtlich der Stoffmengenanteile der Elemente Silicium, Sauerstoff und Kohlenstoff gilt regelmäßig, dass das plasmapolymere Produkt, bezogen auf 100 Atom-% für die Summe der Elemente Silicium, Sauerstoff und Kohlenstoff, enthält:

| | |
|---|---|
| Silicium | 22 bis 28 Atom-% |
| Sauerstoff | 22 bis 30 Atom-% |
| Kohlenstoff | 42 bis 55 Atom-%. |

Bevorzugt ist es aber, wenn das plasmapolymere Produkt, bezogen auf 100 Atom-% für die Summe der Elemente Silicium, Sauerstoff und Kohlenstoff, enthält:

| | |
|---|---|
| Silicium | 22 bis 26 Atom-% |
| Sauerstoff | 24 bis 29 Atom-% |
| Kohlenstoff | 47 bis 51 Atom-%, |

Hierbei beziehen sich die Atom-%-Angaben auf ESCA-Messungen bei Einstellungen, welche für ein wiederum als Standard eingesetztes trimethylsiloxy-terminiertes Polydimethylsiloxan (PDMS) mit einer kinematischen Viskosität von 350 mm²/s bei 25 °C und einer Dichte von 0,97 g/mL bei 25 °C für Silicium 22,9 Atom-%, für Sauerstoff 23,4 Atom-% und für Kohlenstoff 53,75 Atom-% ergeben; hinsichtlich der Toleranzen vgl. Tabelle 1, unten.

Unter Berücksichtigung bevorzugter Gewichtsanteile und Stoffmengenverhältnisse ist ein erfindungsgemäßer Artikel besonders bevorzugt, wobei das plasmapolymere Produkt, bezogen auf 100 Atom-% für die Summe der Elemente Silicium, Sauerstoff und Kohlenstoff, enthält:
Silicium 22 bis 28 Atom-%
Sauerstoff 22 bis 30 Atom-%
Kohlenstoff 42 bis 55 Atom-%,
wobei für die Stoffmengenverhältnisse in dem plasmapolymeren Produkt gilt:

| | | |
|---|---|---|
| 0,75 | < n(O) : n(Si) < | 1,25 |
| 1,50 | < n(C) : n(Si) < | 2,50 |
| 1,50 | < n(C) : n(O) < | 2,50 |
| 2,25 | < n(H) : n(C) < | 3,00 und |

und
wobei im ESCA-Spektrum des plasmapolymeren Produktes, im Vergleich mit einem trimethylsiloxy-terminierten Polydimethylsiloxan (PDMS) mit einer kinematischen Viskosität von 350 mm²/s bei 25 °C und einer Dichte von 0,97 g/mL bei 25 °C,
der Si 2p Peak einen Bindungsenergiewert besitzt, der um maximal 0,44 eV zu höheren oder niedrigeren Bindungsenergien verschoben ist, und
der O 1s Peak einen Bindungsenergiewert besitzt, der um maximal 0,50 eV zu höheren oder niedrigeren Bindungsenergien verschoben ist.

Hinsichtlich der ESCA-Messbedingungen und dem gewählten Standard gilt hierbei das oben Gesagte entsprechend.

Und in einem ganz besonders bevorzugten erfindungsgemäßen Artikel enthält das plasmapolymere Produkt bezogen auf 100 Atom-% für die Summe der Elemente Silicium, Sauerstoff und Kohlenstoff:

| | |
|---|---|
| Silicium | 22 bis 26 Atom-% |
| Sauerstoff | 24 bis 29 Atom-% |
| Kohlenstoff 47 | bis 51 Atom-%, |

wobei für die Stoffmengenverhältnisse in dem plasmapolymeren Produkt gilt:

| | | |
|---|---|---|
| 1,00 | < n(O) : n(Si) < | 1,25 |
| 2,00 | < n(C) : n(Si) < | 2,50 |
| 1,60 | < n(C) : n(O) < | 2,30 |
| 2,40 | < n(H) : n(C) < | 3,00 und |

und
wobei
der Si 2p Peak einen Bindungsenergiewert besitzt, der um maximal 0,40 eV zu höheren oder niedrigeren Bindungsenergien verschoben ist, und
der O 1s Peak einen Bindungsenergiewert besitzt, der um maximal 0,40 eV zu höheren oder niedrigeren Bindungsenergien verschoben ist.

Erfindungsgemäße plasmapolymere Produkte (als erfindungsgemäße Artikel oder Bestandteil eines solchen Artikels) sind insbesondere in ihren bevorzugten Ausgestaltungen hydrolysebeständig, elastisch und damit rissfrei sowie dehnbar bis zu Dehnungen von >50% (in bevorzugten Ausgestaltungen >100%). Plasmapolymere Produkte, die einen erfindungsgemäßen Artikel oder den Bestandteil eines solchen Artikels darstellen, stellen eine flexible Migrationsbarriere dar. Ferner besitzen erfindungsgemäße plasmapolymere Produkte Antihafteigenschaften und eine im Vergleich mit einer Vielzahl von Elastomeren verbesserte Gleitfähigkeit (vergleiche insoweit die Gleiteigenschaften von Fluorelastomeren wie Viton^{®}, Silikongummis, Kautschuk etc.), da die für solche Elastomere übliche Oberflächenklebrigkeit (Tack) fehlt bzw. stark herabgesetzt ist.

Bevorzugt ist ein erfindungsgemäßer Artikel - insbesondere in einer der vorstehend als bevorzugt gekennzeichneten Ausgestaltungen -, wobei (i) der Artikel aus dem plasmapolymeren Produkt besteht und eine Beschichtung (auf einem Substrat) oder ein Teil einer Beschichtung oder eine Folie mit vorzugsweise geringer Schichtdicke (hier ist ausdrücklich ein Film bzw. eine Folie gemeint, welche freitragend und nicht an ein Substrat gebunden ist) ist oder (ii) ein Verbund ist, umfassend ein Substrat sowie eine Beschichtung in Form eines vom Substrat zerstörungsfrei ablösbaren oder nicht zerstörungsfrei ablösbaren plasmapolymeren Produktes, wobei die (i) Folie vorzugsweise eine Dicke im Bereich von 20 bis 2000 nm und (ii) die Beschichtung vorzugsweise eine Dicke im Bereich von 1 bis 2000 nm besitzt.

Eine erfindungsgemäße (freitragende) Folie (als Beispiel eines erfindungsgemäßen Artikels, der aus einem plasmapolymeren Produkt besteht) lässt sich herstellen, indem, im Gegensatz zu DE 10 2004 026 479, ein Träger (beispielsweise ein sehr glatter Träger wie z. B. ein Silicium-Wafer oder eine Aluminiumfolie oder dergleichen oder ein topographisch strukturierter Träger) mit einer wasserlöslichen Substanz (z. B. Zucker, Salz, ein wasserlöslicher Lack oder dergleichen) beschichtet wird oder selbst wasserlöslich ist. Auf dem Träger, der gegebenenfalls eine Beschichtung aus einer wasserlöslichen Substanz besitzt, wird dann eine plasmapolymere Beschichtung abgeschieden, welche die oben genannten Eigenschaften eines erfindungsgemäßen plasmapolymeren Produktes besitzt. Die plasmapolymere Beschichtung kann dann in einem Wasserbad von dem Träger abgelöst werden, ohne dabei selbst beschädigt zu werden. Die abgelöste plasmapolymere Beschichtung (plasmapolymere Folie) besitzt üblicherweise eine Dicke im Bereich 20 bis 2000 nm. Sie wird nachfolgend als Nanofolie bezeichnet.

Es ist ein großer Vorteil der Plasmapolymerisationstechnologie, dass Folien bzw. Beschichtungen mit einer geringen Dicke von z. B. 1 bis 2000 nm erzeugt werden können, welche dennoch die gewünschten Eigenschaften insbesondere hinsichtlich Elastizität und Flexibilität besitzen. Ferner ist es möglich, beispielsweise eine Beschichtung an der Oberfläche zu aktivieren, so dass nach dem Ablösen eine Nanofolie mit dehäsiven Oberflächeneigenschaften auf der einen Seite und adhäsiven Oberflächeneigenschaften auf der anderen Seite entsteht.

Besonders bevorzugt ist ein erfindungsgemäßer Artikel, bei dem es sich um einen Verbund handelt, der ein Substrat sowie eine Beschichtung mit einer Dicke im Bereich von 1 bis 2000 nm umfasst, wobei die Beschichtung selbst wiederum aus einem von Substrat zerstörungsfrei ablösbaren oder aber nicht zerstörungsfrei ablösbaren plasmapolymeren Produkt besteht, und wobei die Beschichtung einen Durchtritt von Molekülen mit einer Molmasse von Molmasse von 100 g/mol oder mehr, vorzugsweise 50 g/mol oder mehr, nicht erlaubt. Ein solcher Verbund umfasst somit eine (plasmapolymere) Permeationsbarriere für Moleküle mit einer Molmasse von 100 g/mol (bzw. 50 g/mol) oder mehr. In eigenen Untersuchen hat sich gezeigt, dass eine erfindungsgemäße plasmapolymere Folie oder Beschichtung (als Beispiele für ein erfindungsgemäßes plasmapolymeres Produkt) bei sehr geringer Dicke von zum Teil deutlich unter 1000 nm bereits den Durchtritt von Molekülen mit einer Molmasse von 100 g/mol (vorzugsweise 50 g/mol) bereits vollständig verhindert. Die Folie oder Beschichtung ist dabei flexibel und elastisch, so dass es im Betrieb auch nicht zu unerwünschten Rissbildungen kommt, die den Durchtritt der besagten Moleküle durch die Beschichtung ermöglichen könnten.

Insbesondere wenn der erfindungsgemäße Artikel ein Verbund der soeben geschilderten Art ist, ist es vorteilhaft, wenn der Artikel ein Verbund ist, der als Substrat ein Elastomer und zusätzlich eine darauf angeordnete Beschichtung mit einer Dicke im Bereich von 1 bis 2000 nm umfasst, wobei die Beschichtung aus einem vom Substrat zerstörungsfrei ablösbaren oder nicht zerstörungsfrei ablösbaren (erfindungsgemäßen) plasmapolymeren Produkt besteht. Der Vorteil eines solchen Artikels liegt jedoch nicht in jedem Falle in seiner Eigenschaft als Permeationsbarriere. In anderen Fällen liegt der Vorteil eines Artikels, der ein Elastomer-Substrat und eine darauf angeordnete plasmapolymere Beschichtung (als Beispiel eines erfindungsgemäßen plasmapolymeren Produktes) umfasst, darin, dass die Beschichtung die Gleiteigenschaften des Artikels im Vergleich mit dem unbehandelten Substrat deutlich erhöht, da der Tack minimiert wird.

In einem erfindungsgemäßen Artikel kann das Substrat auch selbst ein (erfindungsgemäßes oder nicht-erfindungsgemäßes) plasmapolymeres Produkt sein, auf dem dann ein ablösbares oder nicht zerstörungsfrei ablösbares plasmapolymeres Produkt mit der durch die angegebenen ESCA-Daten definierten Struktur und Zusammensetzung angeordnet wird. Das als Substrat eingesetzte plasmapolymere Produkt ist dabei üblicherweise auf einem Basissubstrat angebracht, beispielsweise in Form einer plasmapolymeren Schicht auf einem solchen Basissubstrat. Alternativ kann das Substrat eine Schicht sein, die mit PVD, CVD, plasmaunterstützter CVD (PE-CVD), galvanisch oder mit Hilfe einer Sol-Gel-Technik auf ein Basissubstrat aufgebracht wurde.

Insbesondere kann ein erfindungsgemäßer Artikel aus der Gruppe ausgewählt sein, die besteht aus:
- Artikel mit einer Migrationssperre (Migrationsbarriere) gegenüber Molekülen mit einer Molmasse von 100 g/mol oder mehr, vorzugsweise 50 g/mol oder mehr, umfassend ein plasmapolymeres Produkt wie oben definiert als Migrationssperre (Migrationsbarriere) oder Teil der Migrationssperre
- Artikel mit einer Dichtung, umfassend ein plasmapolymeres Produkt wie oben definiert als Dichtung oder Dichtungsbestandteil,
- optisches Element mit einer Beschichtung, umfassend ein plasmapolymeres Produkt wie oben definiert als Beschichtungsmaterial,
- Artikel umfassend ein korrosionsempfindliches Substrat und eine darauf angeordnete Korrosionsschutzbeschichtung, umfassend ein plasmapolymeres Produkt wie oben definiert als Korrosionsschutzbeschichtung oder Teil der Korrosionsschutzbeschichtung,
- Artikel umfassend ein Substrat mit Easy-to-Clean-Beschichtung, umfassend ein plasmapolymeres Produkt wie oben definiert als Easy-to-Clean-Beschichtung oder Teil der Easy-to-Clean-Beschichtung, insbesondere für die Anwendung im Bereich der Klebstoffverarbeitung,
- Artikel umfassend ein Substrat (insbesondere auch ein (technisches)Textil) mit (hydrolysebeständiger) Easy-to-Clean-Beschichtung, umfassend ein plasmapolymeres Produkt wie oben definiert als (hydrolysebeständige) Easy-to-Clean-Beschichtung oder Teil der (hydrolysebeständigen) Easy-to-Clean-Beschichtung,
- Artikel umfassend ein Substrat (insbesondere auch ein Membran) mit (hydrolysebeständiger) Easy-to-Clean-Beschichtung bzw. Hydrophobausrüstung, umfassend ein plasmapolymeres Produkt wie oben definiert als (hydrolysebeständige) Easy-to-Clean - Beschichtung bzw. Hydrophobausrüstung oder Teil der (hydrolysebeständigen) Easy-to-Clean-Beschichtung bzw. Hydrophobausrüstung,
- Artikel umfassend ein Substrat mit einer antibakteriellen Beschichtung, insbesondere nach oder analog DE 103 53 756, umfassend ein plasmapolymeres Produkt wie oben definiert als (nicht zytotoxische) antibakterielle Beschichtung oder Teil der antibakteriellen Beschichtung,
- Artikel umfassend ein Substrat zur Herstellung einer Verpackung mit einer antibakteriellen Beschichtung, insbesondere nach oder analog PCT/EP 2004/013035, umfassend ein plasmapolymeres Produkt wie oben definiert als (nicht zytotoxische) antibakterielle Beschichtung oder Teil der antibakteriellen Beschichtung,
- Artikel umfassend ein Substrat, insbesondere ein Wärmetauscher oder Teile eines Wärmetauschers, und eine darauf angeordnete Beschichtung, umfassend ein plasmapolymeres Produkt wie oben definiert mit hydrophoben, hydrolysestabilen Oberflächeneigenschaften, welches die Wärmeleitfähigkeit vorzugsweise nur kaum messbar verändert.
- Artikel umfassend ein Substrat mit plasmapolymerer Trennschicht, umfassend ein plasmapolymeres Produkt wie oben definiert als Trennschicht oder Teil der Trennschicht.
- Artikel umfassend ein Elastomerprodukt und eine die Gleitfähigkeit erhöhende Beschichtung auf dem Elastomerprodukt, umfassend ein plasmapolymeres Produkt wie oben definiert als Beschichtung oder Bestandteil der Beschichtung,
- Artikel umfassend ein Substrat, insbesondere eine optische Komponente einer lithographischen Anlage, und eine darauf angeordnete, rückstandsfrei entfernbare, vorzugsweise rückstandsfrei abziehbare Schutzfolie, umfassend ein plasmapolymeres Produkt wie oben definiert als Schutzfolie oder Bestandteil der Schutzfolie,
- Artikel umfassend ein Substrat, insbesondere eine optische Komponente einer lithographischen Anlage, und eine darauf angeordnete Beschichtung, umfassend ein plasmapolymeres Produkt wie oben definiert als hydrolysebeständige, stark hydrophobe und weitgehend UV-transparente Schutzschicht.
- Artikel umfassend eine vorzugsweise plasmapolymere Beschichtung mit einem Defekt und eine Reparaturfolie zur Reparatur des Defektes, umfassend ein plasmapolymeres Produkt wie oben definiert als Reparaturfolie oder Bestandteil der Reparaturfolie,
- Artikel umfassend mindestens zwei härtere Schichten oder Substrate, vorzugsweise mit Barriereeigenschaften, und mindestens eine weiche Spacerschicht zwischen den härteren Schichten oder Substraten, umfassend ein plasmapolymeres Produkt wie oben definiert als Spacerschicht oder Bestandteil der Spacerschicht,
- Artikel umfassend eine Barrierebeschichtung oder ein Substrat zur Verringerung der Migration von Gasen und Dämpfen, insbesondere Wasserdampf, Kohlendioxid oder Sauerstoff, mit einer hydrophoben Deckschicht, umfassend ein plasmapolymeres Produkt wie oben definiert als Deckschicht oder Bestandteil der Deckschicht,
- Artikel umfassend ein vorzugsweise elektrisches Bauelement und eine elektrisch isolierende Folie oder Beschichtung, umfassend ein plasmapolymeres Produkt wie oben definiert als isolierende Folie oder isolierende Beschichtung oder Teil einer solchen Folie oder Beschichtung.
- Artikel umfassend einen vorzugsweise implantierbaren medizintechnischen Gegenstand umfassend ein plasmapolymeres Produkt wie oben definiert. Vorteilhafter Weise erlaubt die Beschichtung aufgrund ihrer dehäsiven Oberflächeneigenschaften die Verminderung der Haftung von Bakterien, Eiweißen oder anderen körpereigenen Stoffen (ggf. durch Medikamente modifiziert).
- Vorzugsweise implantierbarer medizintechnischer Silikon-Artikel, umfassend als Beschichtung ein plasmapolymeres Produkt wie oben definiert. Vorteilhafter Weise erlaubt die Beschichtung aufgrund ihrer dehäsiven und/oder dehnfähigen Oberflächeneigenschaften die Erhöhung der Körperverträglichkeit (insbesondere ist die erfindungsgemäße Beschichtung insoweit geeignet, da keine niedermolekularen Reaktionsendprodukte vorhanden sind).

Die Erfindung betrifft auch die Verwendung eines plasmapolymeren Produktes wie vorstehend definiert (als erfindungsgemäßer Artikel bzw. Bestandteil eines erfindungsgemäßen Artikels), als
- Migrationssperre (Migrationsbarriere) gegenüber Molekülen mit einer Molmasse von 100 g/mol oder mehr, vorzugsweise 50 g/mol oder mehr,
- Deckschicht auf einer Barrierebeschichtung oder einem Substrat zur Verringerung der Migration von Gasen und Dämpfen, insbesondere Wasserdampf, Kohlendioxid oder Sauerstoff,
- Dichtungsmaterial, insbesondere für Dichtungen mit einer Dicke von maximal 1000 nm,
- flexible Beschichtung eines flexiblen Verpackungsmaterials,
- Folie oder Beschichtung zur Vergütung optischer Elemente,
- hydrolysebeständige Beschichtung,
- hydrophobe Beschichtung,
- antibakterielle Beschichtung, insbesondere nicht zytotoxische antibakterielle Beschichtung,
- Korrosionsschutzbeschichtung,
- Easy-to-Clean-Beschichtung,
- die Gleitfähigkeit erhöhende Beschichtung auf einem Elastomerprodukt,
- Schutz- und/oder UV-transparente, hydrolysestabile Folie, insbesondere für optische Elemente von lithographischen Anlagen, weiterhin bevorzugt für optische Elemente von immersions-lithographischen Anlagen,
- Trennschicht oder Teil einer Trennschicht
- Reparaturfolie, insbesondere für Easy-to-Clean- oder Trennschichtanwendungen oder optische Anwendungen,
- Folie oder Beschichtung mit dehäsiven und adhäsiven Oberflächeneigenschaften,
- Folie mit Loch- und/oder Streifenmuster insbesondere zur Beschichtung hydrophiler Substrate zur Herstellung von lokalen Hydrophil- bzw. Hydrophobbereichen.
- weiche Spacerschicht zwischen härteren, voneinander zu separierenden Schichten oder Substraten, insbesondere Barriereschichten,
- stark hydrophobe Deckschicht, insbesondere zur Verhinderung der Adsorption von polaren Molekülen oder zur Verbesserung der Barriereeigenschaften von Barrierebeschichtungen bzw. Ultra-Barrierebeschichtungen gegenüber Gasen und Dämpfen wie Wasserdampf, Kohlendioxid oder Sauerstoff.
- Isolatorfolie oder -beschichtung insbesondere in elektrischen Bauelementen,
- Trennschicht bzw. stark hydrophobe Schicht auf diamantähnlichen Beschichtungen, insbesondere dünnen, chemisch auf das Substrat angebundenen Beschichtungen.

Die Erfindung betrifft auch ein Verfahren zur Herstellung eines erfindungsgemäßen plasmapolymeren Produktes (als erfindungsgemäßer Artikel oder Bestandteil eines erfindungsgemäßen Artikels), das sich wie folgt ausführen lässt:
Am leichtesten gelingt die Herstellung mittels eines Niederdruck-Plasmapolymerisationsverfahrens. Hierfür wird ein Vakuumreaktor eingesetzt, der mit Hilfe von Vakuumpumpen mindestens soweit evakuiert wird, dass bei einer gewählten Arbeitsgasmenge der gewünschte Arbeitsdruck gehalten werden kann, insbesondere wenn das Plasma gezündet wird. Der Fachmann wird zudem darauf achten, dass die Gasatmosphäre möglichst wenig von Restwasser (Feuchtigkeit) gestört wird, welches an den Reaktorwänden oder auf diesen befindlichen Beschichtungen haftet (inneres Leck). Ferner wird er sicherstellen, dass die gesamte äußere Leckrate der verwendeten Kammer kleiner als 1 % der dem Prozess zuzuführenden Sauerstoffmenge ist. Eine stabile, niedrige Leckrate kann beispielsweise mittels eines Lecktesters oder eines Massenspektrometers nachgewiesen und gefunden werden. Innere Lecks lassen sich durch ausreichend lange Evakuierungszeiten (mind. ½ Std.) oder durch ein Ausheitzen der Kammer minimieren und ebenfalls mittels eines Massenspektrometers nachweisen. Die hier beschriebene strenge Vorgehensweise, die zeit- und kostenaufwendig ist, ist zur Herstellung gewöhnlicher Easy-to-clean - Beschichtungen nicht notwendig, da hier der Einbau von größeren Mengen an Sauerstoff innerhalb einer gewissen Bandbreite akzeptiert wird.

Geeignete Substratoberflächen können direkt, d.h. ohne Vorbehandung beschichtet werden, es sind allerdings auch Vorbehandlungsschritte bzw. Vorbeschichtungsschritte z.B. zur Reinigung, Aktivierung oder Plasmapolymerisation möglich. Soll ein freitragender Film (eine Nanofolie) erzeugt werden, so ist ein Substrat zu wählen, welches ein einfaches Ablösen ermöglicht. Eine Möglichkeit hierfür ist die Beschichtung eines in einer Flüssigkeit leicht löslichen Feststoffes, bzw. die Beschichtung einer solchen Flüssigkeit mit einem Dampfdruck, der weit unter dem gewählten Arbeitsdruck liegt. Als zu beschichtende (Fest-)Stoffe bieten sich beispielsweise wasserlösliche Stoffe oder Stoffe, die in organischen Lösemitteln gelöst werden können, an. Zudem kann die Beschichtung auch auf Oberflächen stattfinden, auf denen eine äußerst geringe Haftung erwartet wird, beispielsweise auf Fluorpolymeren oder auch auf Trennmitteln. Letztere eröffnen zudem die Option, das auf dem Substrat und unter der Beschichtung befindliche Trennmittel in organischen Lösemitteln zu lösen.

Als Arbeitsgase für die Herstellung des erfindungsgemäßen Stoffes werden siliziumorganische Precursor, wie Hexamethyldisiloxan (HMDSO), Octamethyltrisiloxan, Tetramethylsilan (TMS) oder Vinyltrimethylsilan (VTMS), eingesetzt. Besonders bevorzugt ist HMDSO, da es in sich bereits über die erste Si - O - Si - Einheit verfügt, bereits mit Methylgruppen abgesättigt ist und einen vergleichsweise hohen Dampfdruck besitzt. Vorzugsweise wird dieser Precursor zusammen mit Sauerstoff verarbeitet. Sauerstoff als zusätzliches Arbeitsgas ermöglicht nicht nur die Zugabe des gewünschten Sauerstoffanteiles, sondern ermöglicht auch eine plasmachemische "Verbrennung" der vom HMDSO abgespaltenen organischen Bruchstücke.

Das Plasma kann grundsätzlich mit Hilfe der verschiedensten Frequenzen gezündet werden, allerdings wird vorzugsweise ein so genanntes strukturerhaltendes Plasma gewählt. Dies bedeutet, dass der zugeführte Precursor, beispielsweise HMDSO, nicht vollständig im Plasma fragmentiert, sondern so milde Plasma-Prozessparameter gewählt werden, dass beispielsweise pro Precursormolekül nur eine Methylgruppe abgespalten wird.

Dadurch kann ein methylreiches Si-O-Netzwerk entstehen. Ein solches Material kann durch hohes Ionenbombardement stark geschädigt oder gestört werden, so dass HF-Frequenzen (13,56 MHz) bevorzugt sind und das Substrat vorzugsweise nicht auf der Elektrode befestigt wird. Bei der Verwendung von GHz-Frequenzen ist zu berücksichtigen, dass die Fragmentierung in derart erzeugten Plasmen hoch ist und daher besondere Vorsicht geboten ist.

Für die Leistung in Bezug auf die zugeführte Gasmenge wird vorzugsweise ein Arbeitsbereich gewählt, bei dem im Precursorüberschuss gearbeitet wird. Es steht somit mehr Arbeitsgas zur Verfügung, als mit der zugeführten Plasmaleistung verarbeitet werden kann. Der Fachmann erkennt dies beispielsweise daran, dass eine Erhöhung der zugeführten Leistung zu einer deutlichen Steigerung der Abscheiderate führt. Zur Einstellung des Gasmengenverhältnisses, beispielsweise von HMDSO zu Sauerstoff, sind die nachfolgenden Beispiele als Hilfestellung zu betrachten; eine Arbeitsvorschrift ist hierfür nicht erstellbar, da bei der Plasmapolymerisation die Einstellungen der Prozessparameter u.a. stets sehr stark von der verwendeten Plasma-Anlage abhängen. Der Fachmann wird jedoch immer einen deutlichen Überschuss an HMDSO wählen. Die Leistung ist unter Berücksichtigung der jeweiligen Gesamtgasmenge einzustellen. Hierbei ist es hilfreich, in Vorversuchen den Wasserrandwinkel auf sehr glatten, ebenen beschichteten Probekörpern, beispielsweise einem Silicium-Wafer, zu messen. Messwerte im Bereich von 100° signalisieren üblicherweise einen interessanten Arbeitsbereich, wobei allerdings durch Untersuchungen im Rasterelektronenmikroskop oder mit Hilfe von AFM-Messungen sicher zu stellen ist, dass die hergestellte Substanz auf dem Untergrund zu keinem nennenswerten Rauhigkeitsanstieg (Rₐ < 1 nm) führt. Wenn diese Voraussetzung erfüllt ist, ist ein Arbeitsbereich gefunden, der mit Hilfe von XPS-Messungen näher charakterisiert und optimiert werden kann.

Die Beschichtungszeit wird so eingerichtet, dass die gewünschte Schichtdicke erreicht wird.

Vorzugsweise werden zur Abscheidung großvolumige Anlagen benutzt, da es hiermit wesentlich einfacher ist strukturerhaltende Plasmapolymerisationsbedingungen einzustellen, als auch das richtige Gasverhältnis, die notwendige Leistung und das Verhältnis von zugeführter Gasmenge zur Leckrate.

Das erfindungsgemäße Verfahren kann wahlweise mittels Niederdruck- oder Atmosphärendruck-Plasmapolymerisation durchgeführt werden. Kommen Atmosphärendruckplasmen zur Anwendung, so ist der Einfluss von Fremdgasen, wie Luft oder Luftfeuchtigkeit, möglichst gänzlich zu eliminieren.

Schließlich betrifft die Erfindung auch ein plasmapolymeres Produkt, welches gemäß dem erfindungsgemäßen Verfahren herstellbar ist. Ein solches plasmapolymeres Produkt entspricht in seinen Eigenschaften regelmäßig den plasmapolymeren Produkten, wie sie als erfindungsgemäßer Artikel oder Bestandteil eines solchen erfindungsgemäßen Artikels vorstehend beschrieben sind. Durch Einstellung der Verfahrensparameter Gasfluss, Gaszusammensetzung, Leckrate, in das Plasma eingekoppelte Leistung, Druck und Abstand zur Elektrode lassen sich bevorzugte plasmapolymere Produkte bzw. bevorzugte erfindungsgemäße Artikel in ihrer Struktur und ihren Eigenschaften gezielt einstellen.

Die vorliegende Erfindung wird anhand der nachfolgenden Beschreibung (insbesondere die Anwendungsgebiete und Ausführungsbeispiele) und durch die beigefügten Patentansprüche näher erläutert.

### Anwendungsgebiete:

Nachfolgend werden bevorzugte Anwendungsgebiete für erfindungsgemäße Artikel (z. B. erfindungsgemäße plasmapolymere Produkte) vorgestellt, ohne dass hierdurch eine Beschränkung der Anwendungsmöglichkeiten beabsichtigt ist. Der Fachmann wird in Kenntnis der Eigenschaften erfindungsgemäßer Artikel eine Vielzahl weiterer Anwendungsgebiete erkennen.

### Anwendungsgebiet: Migrationsbarriere

Ein erfindungsgemäßer Artikel kann eine plasmapolymere Migrationsbarriere (Migrationssperre) gegenüber Molekülen mit einer Molmasse von 50 g/mol oder mehr, vorzugsweise 100 g/mol oder mehr umfassen oder sein. Von besonderer Bedeutung ist dabei die Barrierewirkung gegenüber organischen Molekülen. Konkrete Beispiele für die Anwendung als Migrationsbarriere sind Migrationsbarrieren zur Verhinderung des Austritts unerwünschter Substanzen aus einem Substrat, wie z. B. die Barriere gegenüber Additiven (z. B. Weichmachern) aus einem Kunststoffsubstrat (diese Anwendung ist von besonderer Bedeutung für Lebensmittelverpackungen). Ein erfindungsgemäßer Artikel kann dementsprechend eine Lebensmittelverpackung sein oder umfassen, auf deren dem Lebensmittel zugewandter Seite eine plasmapolymere Beschichtung appliziert ist, die selbst ein erfindungsgemäßes plasmapolymeres Produkt ist. Die Lebensmittelverpackung selbst dient in einem solchen Artikel als Substrat; Beispiele für Lebensmittelverpackungsmaterialien, die durch eine erfindungsgemäße plasmapolymere Beschichtung gegenüber dem Lebensmittel versiegelt werden können, sind beispielsweise Weich-PVC, Polyurethanschäume usw.. In diesen konkreten Beispielen dient die plasmapolymere Beschichtung zur Verhinderung des Austritts einer unerwünschten Substanz aus dem Substrat in das Lebensmittel. Eine erfindungsgemäße plasmapolymere Beschichtung verhindert als Migrationsbarriere aber natürlich ebenso gut den Eintritt einer unerwünschten Substanz in ein Substrat.

Ein konkretes Beispiel für eine derartige (erfindungsgemäße, plasmapolymere) Migrationsbarriere zur Verhinderung des Eintritts einer unerwünschten Substanz in ein Substrat ist eine Migrationsbarriere, die auf einem Kunststoffsubstrat angeordnet ist und den Eintritt von Lösemittel, Toxinen oder Farbstoffen aus einer Flüssigkeit in das Substrat verhindert, die die Lebensdauer des Kunststoffsubstrates verkürzen, eine unerwünschte Kontamination des Substrates bewirken bzw. das Substrat einfärben könnten.

Besonders vorteilhaft ist der Einsatz der erfindungsgemäßen plasmapolymeren Produkte (als erfindungsgemäße Artikel oder Bestandteile erfindungsgemäßer Artikel), wenn zusätzlich zu der Barrierewirkung eine oder mehre der nachfolgend genannten technischen Anforderungen vorliegen: Transparenz; geringe Beschichtungsdicke von z. B. weniger als 0,5 µm; hohe UV-Stabilität.

Typische Substrate, auf die eine erfindungsgemäße plasmapolymere Beschichtung appliziert werden kann, um dort als Migrationsbarriere zu fungieren, sind Folien, Dichtungsmaterialien (z. B. PVC-Dichtungen in Schraubdeckeln, insbesondere im Lebensmittelbereich) Gummidichtungen, Verpackungen (Lebensmittel, Pharmazeutika, Kosmetika, Medizintechnik etc.), Textilien, Belichtungsmatrizen für die UV-Härtung etc.. Die plasmapolymeren Migrationsbarrieren sind physiologisch unbedenklich und weisen eine sehr gute Ökobilanz auf.

Im Zusammenhang mit dem Anwendungsgebiet "Migrationsbarriere" ist zu beachten, dass als transparente Barrierebeschichtungen heutzutage vielfach anorganische Schichten wie beispielsweise SiOₓ oder AlOₓ verwendet werden. Diese Beschichtungen können durch verschiedene Vakuumverfahren hergestellt werden, z. B. mit PVD, CVD oder plasmaunterstütztes CVD (PE-CVD). Mit den besagten Beschichtungen können zwar auf geeigneten Substratoberflächen ab einer Beschichtungsdicke von 20 nm gute Barriereeigenschaften erreicht werden, ab ca. 500 nm Dicke treten bei den besagten Beschichtungen jedoch Risse auf, die sie wieder durchlässig machen. Dies trifft auch für plasmapolymere Barriereschichten einer bislang üblichen Struktur zu. Zudem sind die besagten Beschichtungen spröde und daher bruchempfindlich. Es besteht daher die Auffassung, dass für eine sehr gute Barriere auf Basis der bekannten Beschichtungsverfahren eine nahezu fehlstellenfreie anorganische Beschichtung erforderlich ist.

Ein weiterer Nachteil der bekannten anorganischen Beschichtungen besteht darin, dass sie verhältnismäßig unflexibel sind. Bei einer Vielzahl von Anwendungen kommt es aber zu einer Deformation der Substratoberfläche, die bei der Verwendung der besagten konventionellen Beschichtungen zu Rissbildung und somit zum Verlust der Barriereeigenschaft führt. Im Unterschied zu den bislang bekannten anorganischen Migrationsbarrieren, z. B. auf Basis von SiOₓ, sind die erfindungsgemäßen plasmapolymeren Produkte weicher und flexibler.

Die vorliegende Erfindung löst somit auch die Aufgabe, ein verbessertes Dünnschicht-Beschichtungssystem zur Verfügung zu stellen, welches eine geeignete Migrationsbarriere darstellt.

Für die Bereitstellung besonders guter Barriere-Beschichtungssysteme, beispielsweise so genannte Ultrabarrieren, auch für Gase und Dämpfe mit einem geringen Molekulargewicht, kann eine erfindungsgemäße Beschichtung als Zwischenschicht (Spacerschicht) in einem Verbund von Dünnschichten eingesetzt werden. Beispielsweise kann sie in Kombination mit Dünnschichten eingesetzt werden, welche mit PVD, CVD oder plasmaunterstütztem CVD (PE-CVD) aufgebracht werden (wie den oben beschriebenen stark anorganischen SiOₓ-, bzw. AlOₓ-Beschichtungen). Hier kann eine erfindungsgemäße Zwischenschicht beispielsweise die Tendenz zur Rissbildung aufgrund innerer (mechanischer) Spannungen bei dickeren "Gesamtschichtstärken" verringern. Zudem wird die Flexibilität eines solchen Schichtverbundes im Vergleich mit einer Barriereschicht ohne die erfindungsgemäße Zwischenschicht erhöht.

Eine weitere Verbesserung von Barriereschichten, bzw. Ultrabarriereschichten für Gase und Dämpfe mit einem geringen Molekulargewicht kann durch die Verwendung der erfindungsgemäßen Beschichtung als Deckschicht erfolgen. Aufgrund ihrer stark hydrophoben Oberfläche verringert sie die Adsorption von polaren Molekülen wie beispielsweise Wasser, welche häufig die Geschwindigkeit der Migration entscheidend beeinflussen.

### Anwendungsgebiet. Hydrolysebeständigkeit

Hydrolysebeständige Beschichtungen werden in verschiedenen Gebieten benötigt.

Beispielsweise werden hydrolysebeständige, hydrophobe Dünnschichtbeschichtungen, welche eine Wärmeleitung nicht behindern, im Bereich von Wärmetauschern benötigt. Bei Wärmetauschern treten oft gesättigte Wasserdampfatmosphären bei erhöhten Drücken auf. Die Wärmetauscheroberflächen hingegen sind vergleichsweise kühl, so dass Feuchtigkeit auskondensiert. Damit sich kein Wasserfilm auf den Wärmetauscheroberflächen bildet, ist es vorteilhaft, wenn diese Oberflächen hydrophob ausgerüstet sind, um die Bildung eines Wasserfilms zu verhindern, der zusätzlich abzukühlen wäre und die Wärmeleitung behindern würde. Ein Wärmetauscher, dessen Wärmetauscheroberflächen mit einer erfindungsgemäßen plasmapolymeren Beschichtung (als Beispiel eines erfindungsgemäßen plasmapolymeren Produktes) versehen ist, deren ESCA - Daten den im Zusammenhang mit den erfindungsgemäßen Artikeln angegebenen ESCA-Daten entspricht, ist ein Beispiel für einen bevorzugten erfindungsgemäßen Artikel.

Ein weiteres Anwendungsgebiet für hydrolysebeständige Beschichtungen liegt im Bereich der Papierherstellung. Im Bereich der Papierherstellung werden hydrolysebeständige Beschichtungen mit Antihaft-Eigenschaften benötigt, um ein Anhaften so genannter Stickies zu verhindern. Es hat sich gezeigt, dass das Anhaften von Stickies durch Ausrüsten der betroffenen Teile einer Papierherstellungsanlage mit einer erfindungsgemäßen plasmapolymeren Beschichtung, deren ESCA-Daten den oben angegeben ESCA-Daten für ein erfindungsgemäßes plasmapolymeres Produkt entsprechen, dass das Anhaften von Stickies vollständig oder zumindest sehr weitgehend verhindert.

Ebenso kann die erfindungsgemäße Beschichtung als Hydrolyseschutz-Deckschicht auf andere Dünnschichtsysteme aufgebracht werden, welche ihrerseits beispielsweise mit PVD, CVD, plasmaunterstütztem CVD (PE-CVD), Plasmapolymerisation, galvanisch oder in einem Sol-Gel-Prozess aufgebracht wurden. Insbesondere anorganische Beschichtungen wie SiOₓ und AlOₓ-Beschichtungen zeigen trotz ihrer guten Korrosionsschutz-Eigenschaften, beispielsweise auf anodisierten Aluminium-Substraten, eine vergleichsweise geringe Hydrolysebeständigkeit und werden vorzugsweise mit einer erfindungsgemäßen Beschichtung ausgerüstet.

### Anwendungsgebiet: Antihafteigenschaft / Easy-to-clean-Eigenschaften

Bei einer Vielzahl von Werkzeugen und Maschinen sind Antihafteigenschaften und/oder Easy-to-clean-Eigenschaften gewünscht. Insbesondere sind in diesem Zusammenhang Werkzeuge und Maschinen (wie Buchbindemaschinen, Klebstoffauftragswerke, Siegelanlagen, Druckwerke, Kaschieranlagen) zu nennen, die mit Klebstoffen (z. B. Hot-Melts, 1 Komponenten- und 2 Komponenten-Klebstoff mit und ohne Lösungsmittel oder Kaltleim) in Berührung kommen; als Beispiele sind Vorlagebehälter, Pumpen, Sensoren, Mischer, Rohrleitungen, Auftragsköpfe etc. zu nennen. Insbesondere im Bereich der Sensoren besteht ein besonderer Bedarf an Antihaft-Beschichtungen bzw. Easy-to-clean-Beschichtungen, welche den gesamten Sensor überdecken und die Sensoreigenschaften nicht beeinträchtigen. Die Applikation einer erfindungsgemäßen plasmapolymeren Beschichtung (mit ESCA-Daten wie oben für ein plasmapolymeres Produkt angegeben) ist hier besonders vorteilhaft, da sie es erlaubt, den gesamten Sensor zu beschichten ohne die Sensoreigenschaften zu beeinträchtigen. Zudem ist die Oberflächenenergie einer erfindungsgemäßen Beschichtung regelmäßig so gering, dass bereits einige gebräuchliche Lösungsmittel, wie Aceton, nicht mehr auf der Oberfläche spreiten - die Oberflächenenergie der Beschichtung liegt unterhalb derjenigen der Lösemittel. Hierdurch wird auch das Ablauf- und das Reinigungsverhalten von lösungsmittelhaltigen Klebstoffen verbessert.

Ein erfindungsgemäßer Artikel kann beispielsweise ein Formteilwerkzeug mit einer permanenten Entformungsschicht sein, wobei die permanente Entformungsschicht selbst ein erfindungsgemäßes plasmapolymeres Produkt ist, dessen ESCA-Daten oben angegeben sind. Formteilwerkzeuge mit einer permanenten Entformungsschicht sowie Verfahren zu deren Herstellung werden in der EP 1 301 286 B1 offenbart, wobei es dort allerdings als wesentlich festgestellt wurde, dass in der Entformungsschicht durch zeitliche Variation der Polymerisationsbedingungen während der Plasmapolymerisation ein Gradientenschichtaufbau erzeugt wird. Auch innerhalb eines erfindungsgemäßen Artikels, welcher ein erfindungsgemäßes plasmapolymeres Produkt als Entformungsschicht umfasst, kann das plasmapolymere Produkt einen Gradientenschichtaufbau besitzen; erforderlich ist jedoch lediglich, dass eine ESCA-Untersuchung (der Oberfläche) des plasmapolymeren Produktes zu den oben angegebenen Ergebnissen führt. Zudem kann es vorteilhaft sein, zusätzlich zu einer permanenten Entformungsschicht mit Gradientenschichtaufbau auf einem Formteilwerkzeug eine erfindungsgemäße plasmapolymere Beschichtung (ein erfindungsgemäßes plasmapolymeres Produkt) vorzusehen, welche in einer ESCA-Untersuchung die oben angegeben Bindungsenergiewerte zeigt. Das erfindungsgemäße plasmapolymere Produkt (die erfindungsgemäße plasmapolymere Beschichtung) besitzt in einem solchen Fall auch die Funktion einer flexiblen, die Gleiteigenschaften unterstützenden Deckschicht auf der permanenten Entformungsschicht, welche selbst trennende Eigenschaften besitzt. Vereinfachte Ausführungsformen verzichten auf den Gradientenschichtaufbau in der Entformungssschicht.

Wegen der Dehnfähigkeit erfindungsgemäßer Produkte ist es möglich flexible Produkte, wie Folien (insbesondere dehnbare Folien) mit einer entsprechenden Antihaft- bzw. Easy-to-Clean-Oberfläche zu versehen.

### Anwendungsgebiet: verbesserte Gleiteigenschaften

Dieser Aspekt der Erfindung betrifft insbesondere erfindungsgemäße Artikel umfassend ein Elastomerprodukt und eine die Gleitfähigkeit erhöhende Beschichtung auf dem Elastomerprodukt, umfassend ein plasmapolymeres Produkt wie vorstehend definiert als Beschichtung oder Bestandteil der Beschichtung.

Viele Elastomerprodukte, z. B. O-Ringe oder Dichtungen können mit einem erfindungsgemäßen plasmapolymeren Produkt als Beschichtung oder Bestandteil der Beschichtung ausgerüstet werden, ohne dass die Beschichtung rissig wird, wenn die elastischen Eigenschaften des Substrates (des Elastomerprodukts) beansprucht werden.

Eine Vielzahl der derzeit verwendeten Elastomere weist schlechte Gleiteigenschaften auf, so dass die entsprechenden Elastomerprodukte nur schlecht in automatischen Bestückungsautomaten verarbeitet werden können. Die Elastomerprodukte besitzen eine störende Oberflächenklebrigkeit (Tack). Z. B. im technischen Gebiet der Ventile kann sich ein solcher Tack negativ bemerkbar machen, wenn lediglich geringe Loslösekräfte erwartet werden. Erschwerend kommt für diesen Anwendungsbereich hinzu, dass die Stoffe, welche den Tack verursachen, auf den Ventilsitz übertragen werden und auf Dauer zu Ventilundichtigkeiten führen können. Es ist deshalb vorteilhaft, die eingesetzten Elastomere mit einer erfindungsgemäßen plasmapolymeren Beschichtung zu versehen, wie sie vorstehend beschrieben ist, da hierdurch besondere Gleit- und auch Trenneigenschaften bei hoher Dehnfähigkeit gegegeben sind. Elastomer und plasmapolymere Beschichtung (plasmapolymeres Produkt) bilden dabei auch gemeinsam einen erfindungsgemäßen Artikel.

Ein weiteres spezielles Anwendungsgebiet ist die Verbesserung der Gleiteigenschaften von Silikon-Kautschuk, was sowohl im industriell-technischen Bereich als auch beispielsweise im Bereich der Medizintechnik zu einer Reihe vorteilhafter Artikel führt. Ein entsprechender erfindungsgemäßer Artikel umfasst dabei ein Silikon-Kautschuk-Produkt und eine erfindungsgemäße plasmapolymere Beschichtung (wie oben beschrieben).

Für beide vorgenannten Anwendungsgebiete sorgt die erfindungsgemäße plasmapolymere Beschichtung zusätzlich dafür, dass aus diesen Produkten keine Vulkanisationsrestprodukte, keine Weichmacher oder andere Zuschlagsstoffe mit einer Molmasse von z.B. größer 50 g/mol ausdiffundieren können. Damit wird eine verbesserte Eignung im Bereich der Lebensmittelverarbeitung, der Pharmazie und der Medizintechnik erreicht.

### Anwendungsgebiet: antibakterielle Beschichtungen

Nicht zytotoxische, antibakterielle Beschichtungen nach DE 103 53 756 werden vorzugsweise mit Hilfe von SiOx - ähnlichen Beschichtungen hergestellt. Bislang bekannte SiOx-ähnliche Beschichtungen sind zwar in der bevorzugten Schichtdicke von ca. 30 - 60 nm flexibel und können auf einer Folie zur Anwendung gebracht werden, doch ist eine solche Beschichtung keinesfalls Belastungen gewachsen, wie sie z.B. durch einen Tiefziehprozess oder beim Knicken oder Umformen oder Spritzgießen oder Hinterspritzen oder Kaschieren entstehen. Ferner definieren entsprechende Oberflächen bestimmte Haftungseigenschaften (für Bakterien, Pilze, körpereigene Stoffe, etc.). Die Anwendung von erfindungsgemäßen plasmapolymeren Artikeln als SiOx-ähnliche Beschichtung oder zusätzlich zu einer SiOx-Beschichtung, erweitert in beiderlei Hinsicht die Einsatzmöglichkeiten. Insbesondere ermöglicht die hohe Flexibilität und Dehnfähigkeit der erfindungsgemäßen Artikel substratverformende Weiterverarbeitungstechniken, wie Tiefziehen, Umbördeln, Prägen etc.. So können beispielsweise sogar Tuben oder Schaumfolien ausgerüstet werden.

Ferner ist ein solches Produkt auf einer entsprechenden Kaschierfolie oder auch direkt aufgebracht auch für Lebensmittelverpackung geeignet. Insbesondere ist der Einsatz im Verbundfoliensektor von Interesse, da hierdurch beispielsweise Sperrschichteigenschaften mit antibakteriellen Eigenschaften kombiniert werden können.

### Weitere Anwendungsgebiete:

In einer Vielzahl weiterer (erfindungsgemäßer) Artikel kann ein erfindungsgemäßes plasmapolymeres Produkt vorteilhaft eingesetzt werden. Insbesondere sind zu nennen: Dichtungen (als plasmapolymeres Produkt) im sub-Mikrometer-Bereich; Beschichtungen (als plasmapolymeres Produkt) von metallischen Bauteilen oder Halbzeugen, insbesondere als Korrosionsschutzbeschichtung und/oder hydrophobe Beschichtung auf derartigen metallischen Bauteilen oder Halbzeugen, insbesondere für Bauteile oder Halbzeuge, welche in der Weiterverarbeitung oder im Gebrauchseinsatz Verformungen ausgesetzt sind; Beschichtung (als plasmapolymeres Produkt) in Kombination mit anderen plasmapolymeren Beschichtungen (Einbau in Mehrschicht- bzw. Gradientenschichten); Beschichtungen (als plasmapolymeres Produkt), die an einer plasmagestützt vorbehandelten Substratoberfläche haften und gemeinsam mit dem Substrat einen erfindungsgemäßen Artikel bilden.

Die Erfindung wird nachfolgend anhand von Beispielen näher erläutert:

### Beispiel 1: Herstellung eines erfindungsgemäßen plasmapolymeren Produkts

Zur Herstellung des erfindungsgemäßen plasmapolymeren Produkts A wurden die nachfolgenden Prozessparameter verwendet:

| | |
|---|---|
| Gasfluss O₂: | 12 Sccm |
| Gasfluss HMDSO: | 50 Sccm |
| Leistung (W): | 450 |
| Zeit (sec.): | 2700 |
| Druck (mbar): | 0,02 |

Zur Herstellung des erfindungsgemäßen plasmapolymeren Produkts B wurden die nachfolgenden Prozessparameter verwendet:

| | |
|---|---|
| Gasfluss O₂: | 12 Sccm |
| Gasfluss HMDSO: | 50 Sccm |
| Leistung (W): | 450 |
| Zeit (sec.): | 3000 |
| Druck (mbar): | 0,02 |

Vor der Durchführung wurde sichergestellt, dass die Leckrate (äußere Lecks) der benutzten Vakuumkammer deutlich kleiner als 2 × 10⁻³ mbar L / sec ist. Ferner wurde die interne Leckrate mit Hilfe eines Massenspektrometers überprüft. Dabei wurde darauf geachtet, dass der Prozess erst gestartet wurde, als bei hoher Empfindlichkeit des Spektrometers der Messwert für die Masse 18 (Wasser) stark abgesunken und dann konstant war.

Nach der Herstellung der Beschichtung auf einem Objektträger aus Quarzglas und Abschalten des Plasmas wurde die Gasatmosphäre schnellstmöglich durch Wasserstoff ersetzt und danach die Saugleistung reduziert, so dass ein deutlicher Druckanstieg auf ca. 0,2 mbar zu beobachten war. Dieser Zustand wurde bei konstantem Wasserstofffluss über 5 min aufrecht erhalten, um eventuell vorhandenen Radikalen die Absättigung mit Wasserstoff zu ermöglichen.

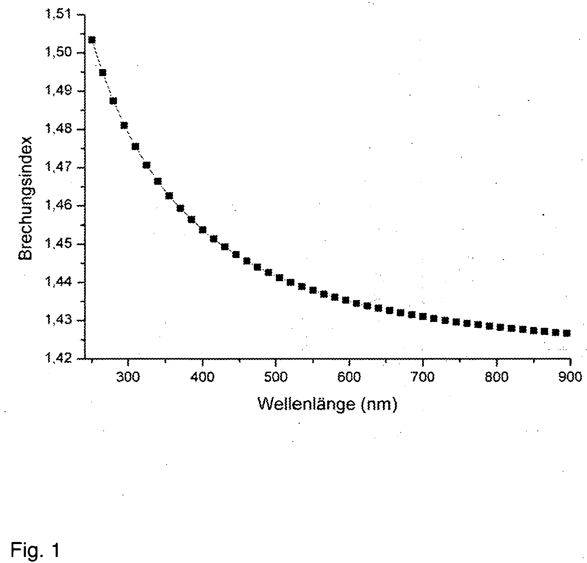

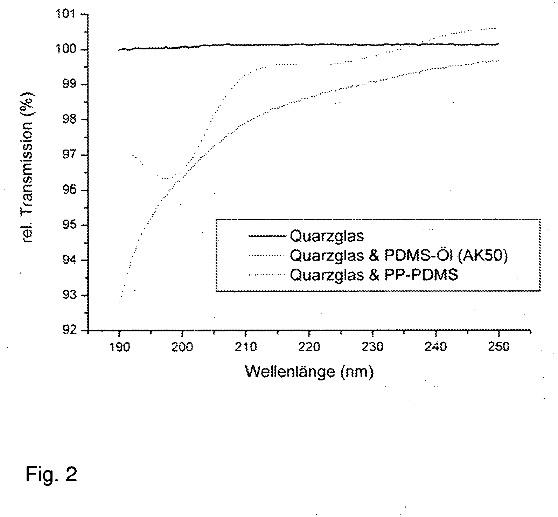

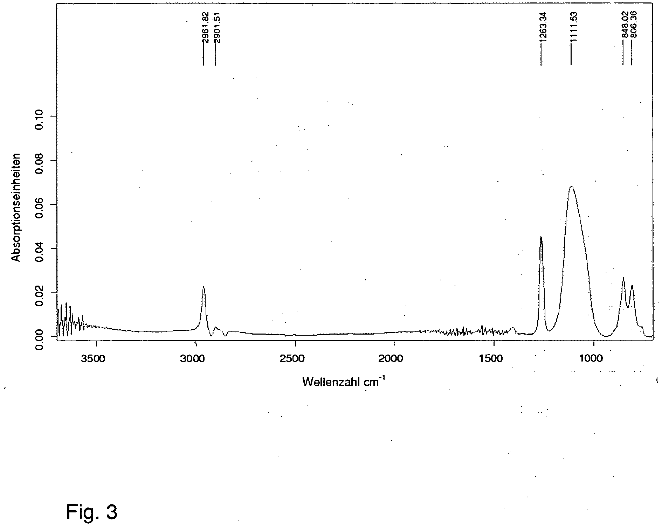

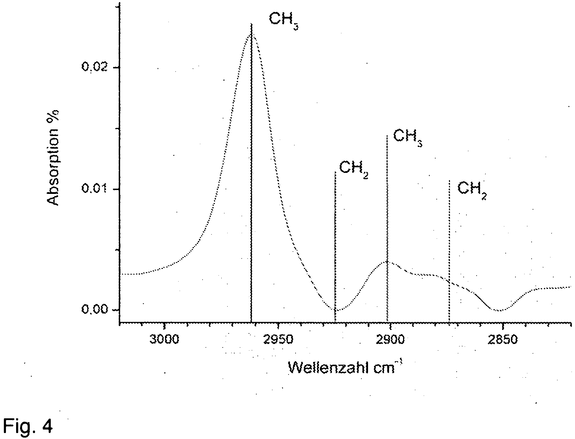

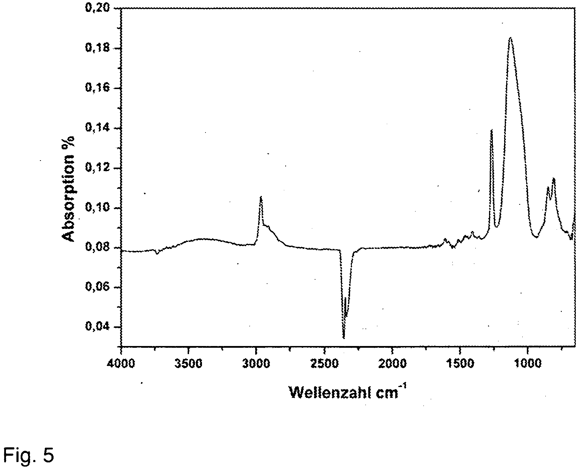

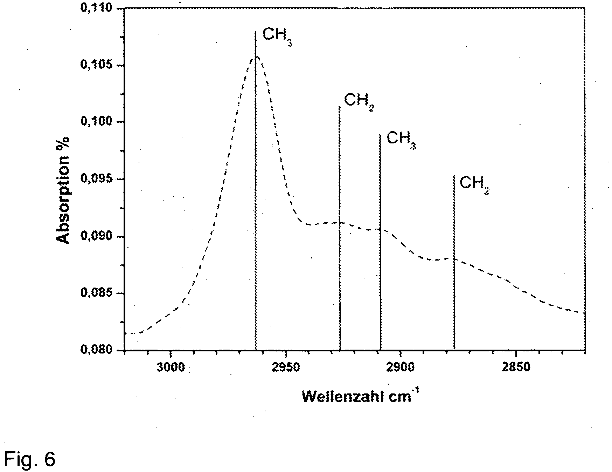

Die beigefügten Figuren 1 bis 6 zeigen:
- Fig. 1:: Verlauf des Brechungsindex als Funktion der Wellenlänge
- Fig. 2:: Transmissionsverlauf eines mit dem erfindungsgemäßen Artikel (PP-PDMS) beschichteten Quarzglases im Vergleich zu dem unbeschichteten Quarzglas und einem mit PDMS-Öl (hier ca. 200 nm AK50, Wacker Chemie) beschichteten Quarzglases im Wellenlängenbereich 190 bis 250 nm
- Fig. 3:: FTIR-Spektrum der erfindungsgemäßen Schicht
- Fig. 4:: FTIR-Spektrum der erfindungsgemäßen Schicht (Detailansicht)
- Fig. 5:: FTIR-Vergleichsspektrum einer Easy-to-clean Schicht
- Fig. 6:: FTIR-Vergleichsspektrum einer Easy-to-clean Schicht (Detailansicht)

### Beispiel 2: Herstellung eines erfindungsgemäßen plasmapolymeren Produkts

Eine zweite Möglichkeit zur Herstellung des erfindungsgemäßen plasmapolymeren Produktes ist durch die folgenden Prozessparameter gegeben:

| | |
|---|---|
| Gasfluss O₂: | 36 Sccm |
| Gasfluss HMDSO: | 170 Sccm |
| Leistung (W): | 1600 |
| Zeit (sec.): | 600 |
| Druck (mbar): | 0,025 |

Auch hier wurde vor der Durchführung sicher gestellt, dass die Leckrate (äußere Lecks) der benutzten Vakuumkammer deutlich kleiner als 2 × 10⁻³ mbar L / sec ist. Ferner wurde die interne Leckrate mit Hilfe eines Massenspektrometers überprüft. Dabei wurde darauf geachtet, dass der Prozess erst gestartet wurde, als bei hoher Empfindlichkeit des Spektrometers der Messwert für die Masse 18 (Wasser) stark abgesunken und dann konstant war.

Eine Wasserstoffnachbehandlung wurde nicht vorgenommen.

### Beispiel 3: Verfahren zur Herstellung einer erfindungsgemäßen freitragenden Folie:

Ein sehr glatter Silicium-Wafer wurde mit einer wasserlöslichen Substanz (Zucker) beschichtet.

Eine Zuckerlösung aus 0,4g/mL Raffinade-Zucker in Wasser wurde auf einen Silizium-Wafer aufgetragen. Nach dem Verdunsten des Wassers wurde auf die Zuckerbeschichtung des Wafers mittels des in Beispiel 1 beschriebenen Verfahrens eine (erfindungsgemäße) plasmapolymere Schicht aufgetragen.

Die applizierte Schicht wurde in einem Wasserbad vom Substrat abgelöst, wobei das Wasserbad die zwischenliegende Zuckerschicht auflöste. Dabei war es vorteilhaft die Schicht am Waferrand mit einem Messer abzuschneiden. Die plasmapolymere Schicht konnte als freitragende Folie (als Beispiel eines erfindungsgemäßen Artikels, der aus einem plasmapolymeren Produkt besteht) dem Wasserbad entnommen werden. Dies wurde dadurch erleichtert, dass die freitragende Folie auf der Wasseroberfläche schwamm. Ihre Dichte war somit kleiner als 1 g/cm³.

Die plasmapolymere Folie besaß eine Dicke von ca. 500 nm.

### Beispiel 4: ESCA-Messungen:

Es wurden von den erfindungsgemäßen plasmapolymeren Produkten "A" und "B", welche gemäß Beispiel 1 hergestellt wurden, sowie von einem Referenzmaterial und einem Vergleichsprodukt ESCA-Spektren aufgenommen und ausgewertet. Die Ergebnisse sind in der nachfolgenden Tabelle 1 aufgeführt, in der Bezug genommen wird auf die Bindungsenergielagen der Signale und die Halbwertsbreiten (FWHM = Full width at half maximum) der einzelnen Peaks. Als Vergleichsprodukt wurde eine plasmapolymere Easy-to-clean-Beschichtung gemäß DE 101 31 156 A1 gewählt.

Die ESCA-Untersuchungen wurden mit dem Spektrometer KRATOS AXIS Ultra der Fa. Kratos Analytical durchgeführt. Die Analysekammer war mit einer Röntgenquelle für monochromatisierte Al K_{α} - Strahlung, einer Elektronenquelle als Neutralisator und einem Quadrupolmassenspektrometer ausgerüstet. Weiterhin verfügte die Anlage über eine magnetische Linse, welche die Photoelektronen über einen Eintrittsschlitz in einen Halbkugelanalysator fokussierte. Durch Kalibrierung wurde der aliphatische Anteil des C 1 s Peaks auf 285,0 eV gesetzt. Während der Messung zeigte die Oberflächennormale auf den Eintrittsschlitz des Halbkugelanalysators.

Die Passenergie betrug bei der Bestimmung der Stoffmengenverhältnisse jeweils 160 eV, die entsprechenden Spektren werden als Übersichtsspektren bezeichnet. Bei der Bestimmung der Peak-Parameter betrug die Passenergie jeweils 20 eV.

Die genannten Messbedingungen sind bevorzugt, um eine weitgehende Unabhängigkeit vom Spektrometertyp zu ermöglichen und um erfindungsgemäße plasmapolymere Produkte zu identifizieren.

Als Referenzmaterial wurde das Polydimethylsiloxan Silikonöl DMS-T23E der Firma Gelest Inc. (Morrisville, USA) verwendet. Dieses trimethylsiloxy-terminierte Silikonöl besitzt eine kinematische Viskosität von 350 mm²/s (±10%) und eine Dichte von 0,970 g/mL bei 25 °C sowie ein mittleres Molekulargewicht von ca. 13 650 g/mol. Das ausgewählte Material zeichnet sich durch einen extrem geringen Anteil an verdampfbaren Bestandteilen aus: nach 24 Stunden bei 125 °C und 10⁻⁵ Torr Vakuum wurden weniger als 0,01% flüchtige Anteile nachgewiesen (nach ASTM-E595-85 und NASA SP-R0022A). Es wurde mit Hilfe eines Spin-Coating-Prozesses eine 40 bzw. 50 nm dicke Schicht auf einen Siliziumwafer aufgetragen; dabei wurde als Lösemittel Hexamethyldisiloxan verwendet.

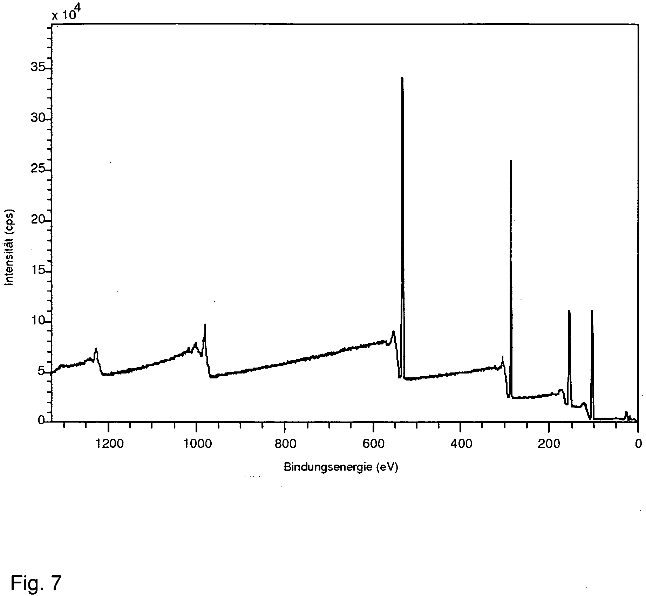

Die gemessenen Spektren sind - für die Übersichtsspektren exemplarisch jeweils eins - als Figuren 7 bis 10 (Übersichtsspektren), sowie 11 bis 22 (Detailspektren) angefügt. Es zeigen:
- Fig. 7:: XPS-Übersichtsspektrum des DMS-T23E

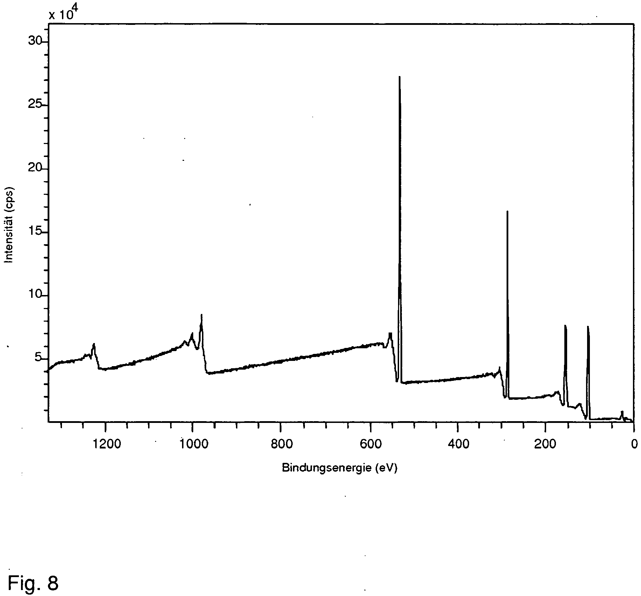

- Fig. 8:: XPS-Übersichtsspektrum des erfindungsgemäßen plasmapolymeren Produktes A

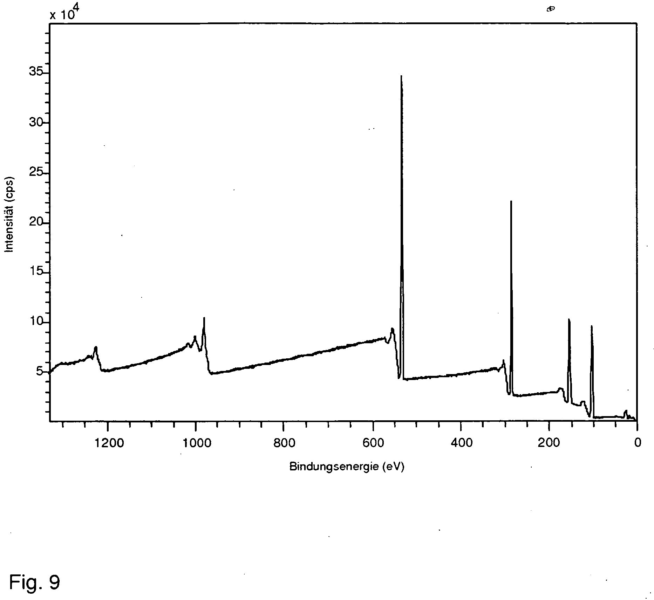

- Fig. 9:: XPS-Übersichtsspektrum des erfindungsgemäßen plasmapolymeren Produktes B

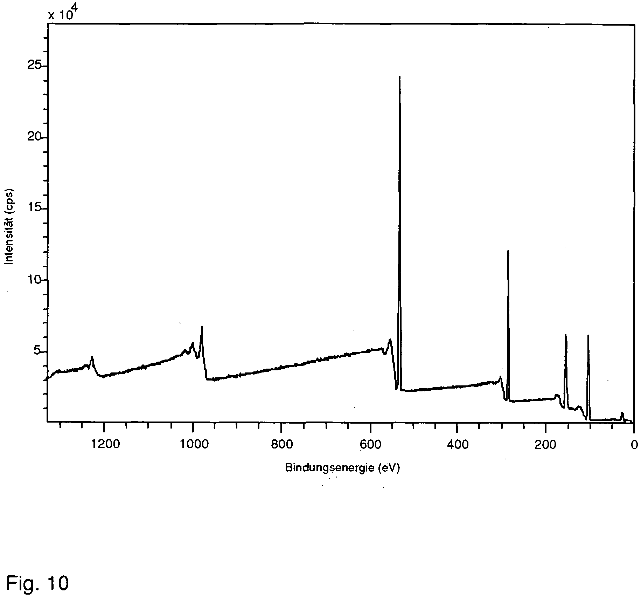

- Fig. 10:: XPS-Übersichtsspektrum der Easy-to-clean-Beschichtung gemäß DE 101 31 156 A1 (Vergleich)

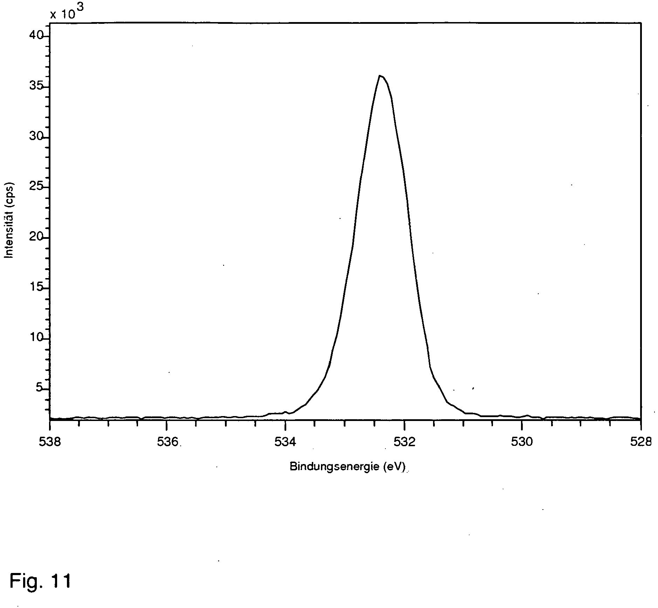

- Fig. 11:: XPS-Detailspektrum des O 1s Peaks des DMS-T23E

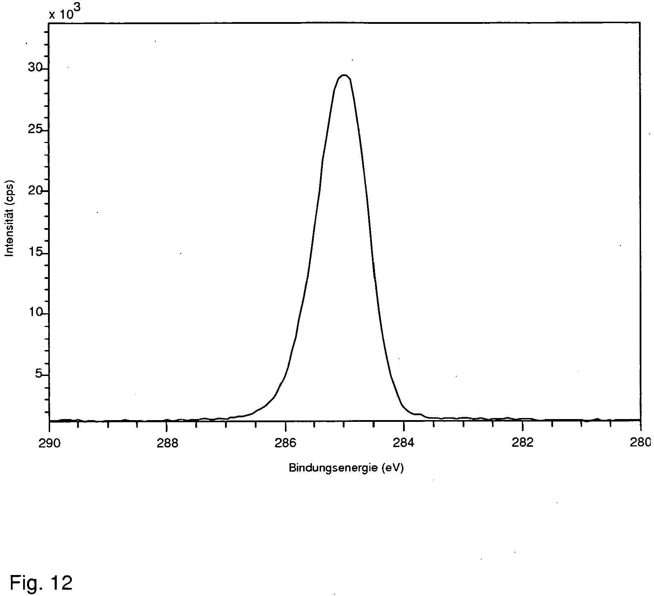

- Fig. 12:: XPS-Detailspektrum des C 1s Peaks des DMS-T23E

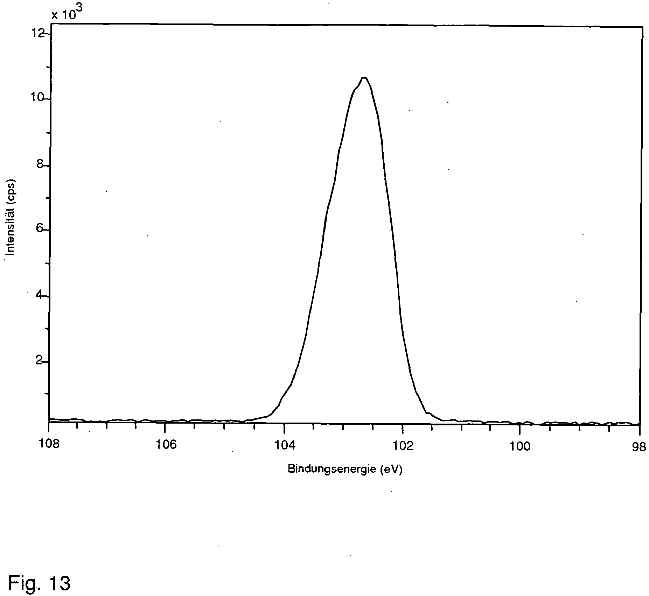

- Fig. 13:: XPS-Detailspektrum des Si 2p Peaks des DMS-T23E

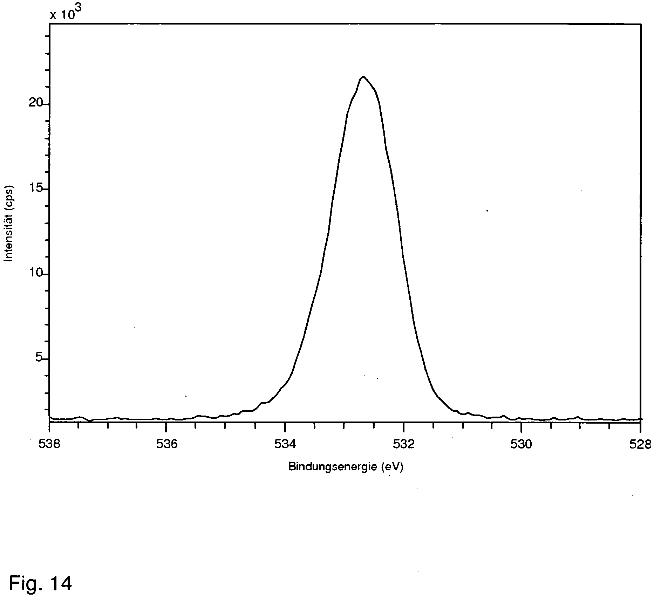

- Fig. 14:: XPS-Detailspektrum des O 1s Peaks des erfindungsgemäßen plasmapolymeren Produktes A

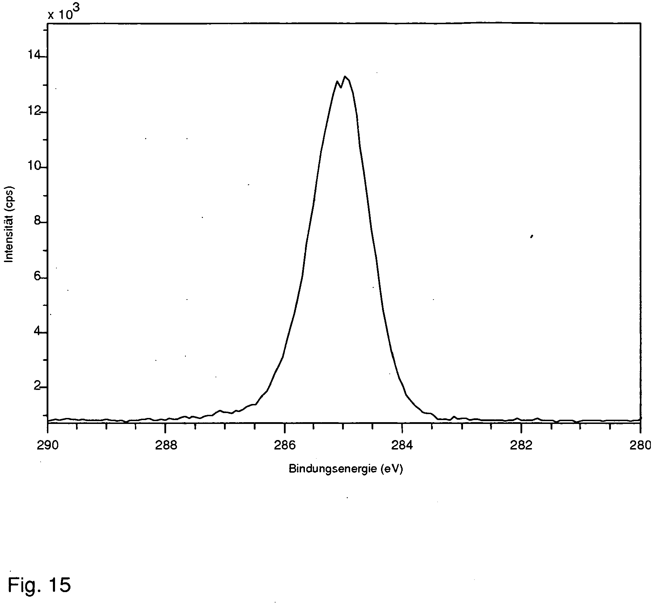

- Fig. 15:: XPS-Detailspektrum des C 1s Peaks des erfindungsgemäßen plasmapolymeren Produktes A

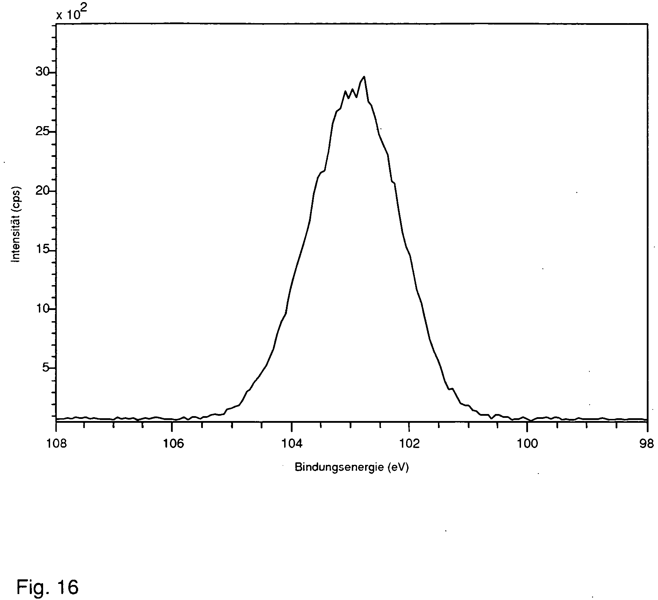

- Fig. 16:: XPS-Detailspektrum des Si 2p Peaks des erfindungsgemäßen plasmapolymeren Produktes A

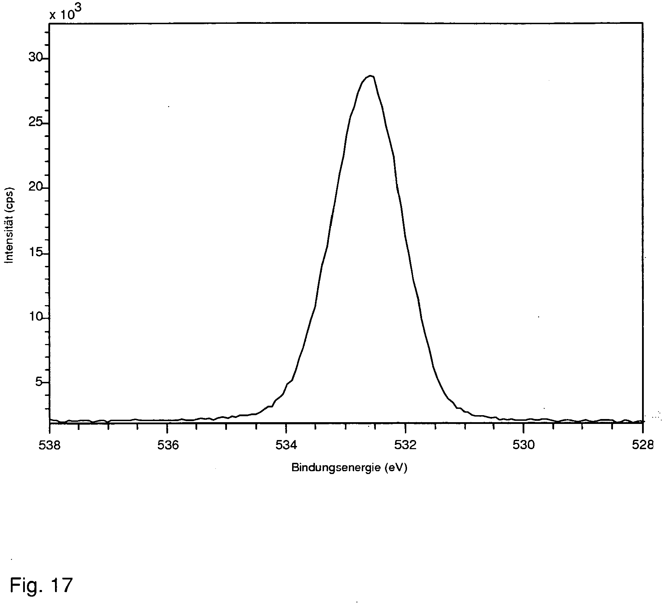

- Fig. 17:: XPS-Detailspektrum des O 1s Peaks des erfindungsgemäßen plasmapolymeren Produktes B

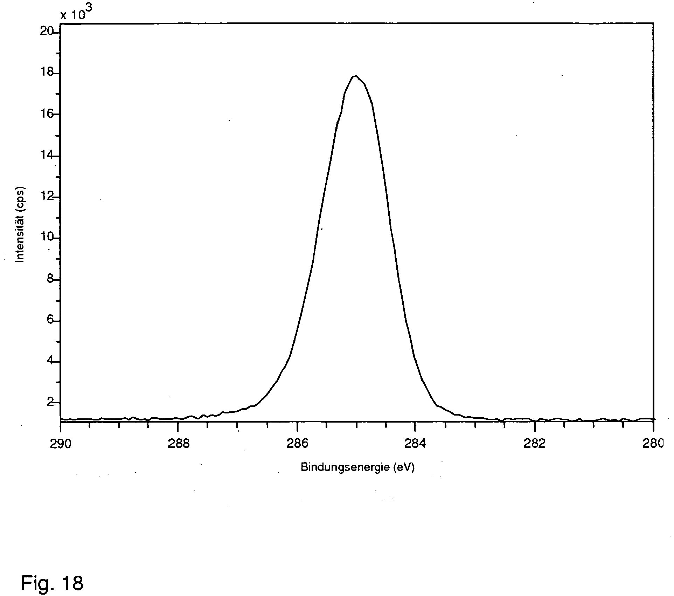

- Fig. 18:: XPS-Detailspektrum des C 1s Peaks des erfindungsgemäßen plasmapolymeren Produktes B

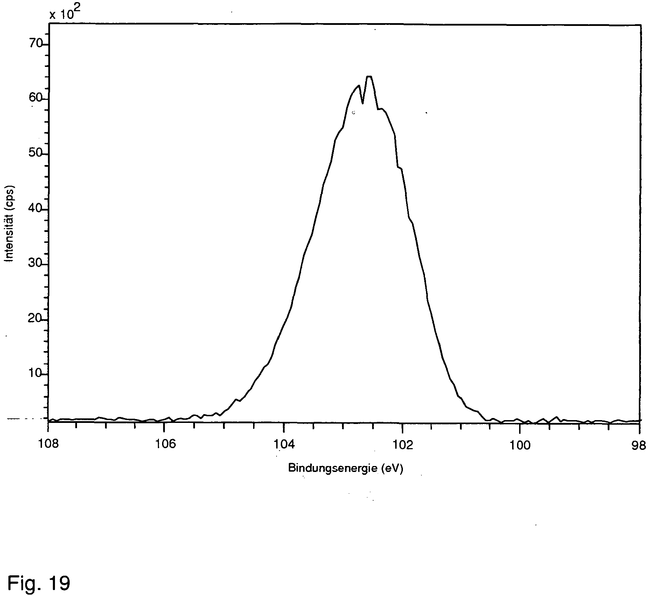

- Fig. 19:: XPS-Detailspektrum des Si 2p Peaks des erfindungsgemäßen plasmapolymeren Produktes B

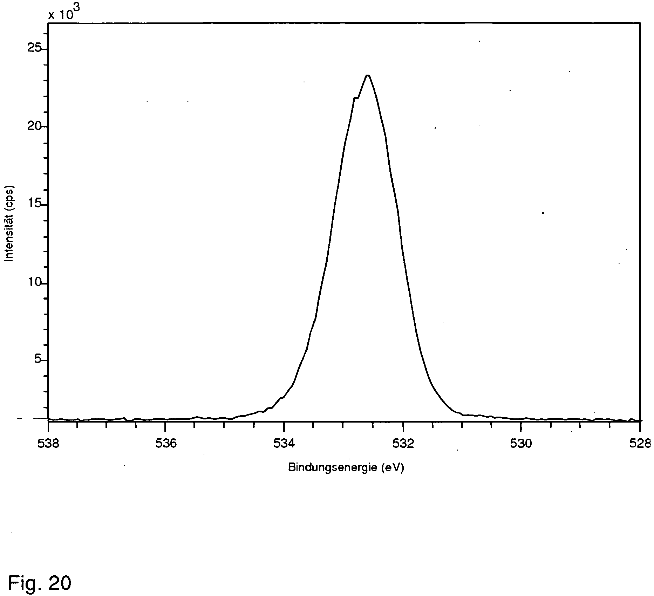

- Fig. 20:: XPS-Detailspektrum des O 1s Peaks der Easy-to-clean-Beschichtung gemäß DE 101 31 156 A1 (Vergleich)

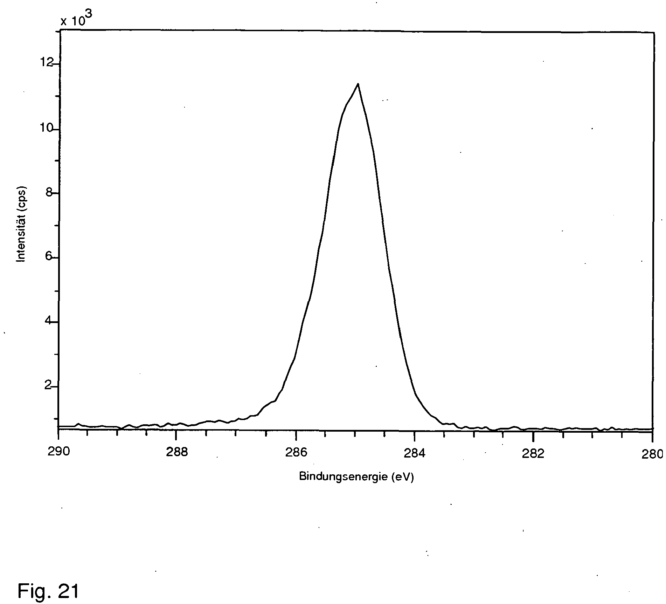

- Fig. 21:: XPS-Detailspektrum des C 1s Peaks der Easy-to-clean-Beschichtung gemäß DE 101 31 156 A1 (Vergleich)

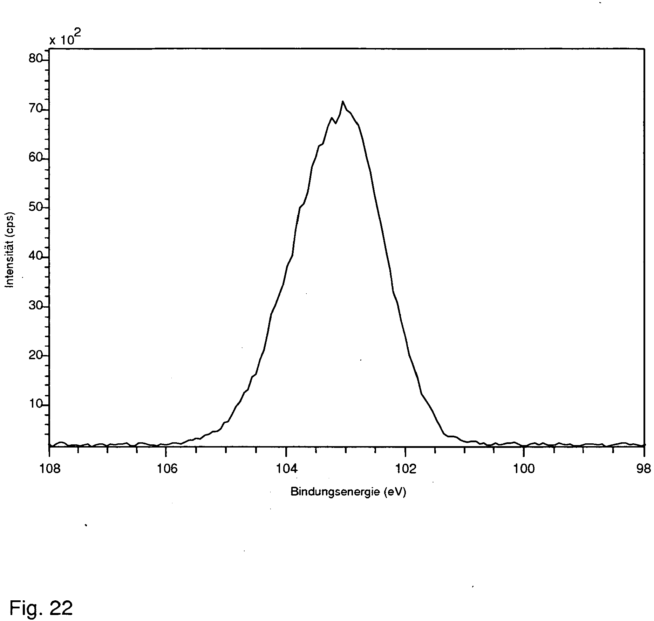

- Fig. 22:: XPS-Detailspektrum des Si 2p Peaks der Easy-to-clean-Beschichtung gemäß DE 101 31 156 A1 (Vergleich)

Für die Übersichtsspektren wurden vier bis sechs Messungen an unterschiedlichen Positionen auf den Proben durchgeführt. In Tabelle 1 sind für die Stoffmengenverhältnisse mit ± die maximalen Abweichungen vom Mittelwert der durchgeführten Messungen angegeben.

**Tabelle 1: Ergebnisse der ESCA-Messungen**

| | O 1s | C 1s | Si 2p | Stoffmengenverhältnisse |
|---|---|---|---|---|
| | Menge in at% | Menge in at% | Menge in at% | |
| | Energiemax. [eV] | Energiemax. [eV] | Energiemax. [eV] | |
| | FWHM [eV] | FWHM [eV] | FWHM [eV] | |
| PDMS - Öl | 23,4±0,3 | 53,75±0,35 | 22,9±0,3 | O/Si = 1,02±0,03 |
| DMS-T23E | 532,46 | 285,0 | 102,69 | C/Si = 2,35±0,03 |
| (Referenz) | 1,01 | 1,00 | 1,19 | C/O = 2,29±0,04 |
| Erfindungsgemäßes plasmapolymeres Produkt A | 27,2±0,7 | 48,8±0,7 | 24,02±0,3 | O/Si = 1,13±0,03 |
| | 532,71 | 285,0 | 102,77 | C/Si = 2,03±0,05 |
| | 1,29 | 1,15 | 1,77 | C/O = 1,80±0,07 |
| Erfindungsgemäßes plasmapolymeres Produkt B | 26,0±0,2 | 50,2±0,1 | 23,8±0,2 | O/Si = 1,10±0,02 |
| | 532,58 | 285,0 | 102,61 | C/Si = 2,11±0,01 |
| | 1,37 | 1,35 | 1,90 | C/O = 1,93±0,02 |
| Easy-to-clean-Beschichtung | 30,7±0,5 | 44,7±0,6 | 24,6±0,4 | O/Si = 1,25±0,02 |
| | 532,64 | 285,0 | 103,14 | C/Si = 1,82±0,05 |
| (gemäß DE 101 31 156 A1) | 1,22 | 1,18 | 1,75 | C/O = 1,46±0,04 |
| (Vergleich) | | | | |

Das erfindungsgemäße plasmapolymere Produkt, welches der ESCA-Messung unterzogen wurde, besitzt im Vergleich mit einer typischen Easy-to-clean-Beschichtung gemäß DE 101 31 156 A1 eine um ca. 0,37 bis 0,53 eV zuniedrigerer Energie verschobene Bindungsenergielage des Si 2p - Peaks. Diese Beobachtungen entsprechen einer Erhöhung des Anteils sekundärer SiliciumAtome (das heißt des Anteils an Silicium-Atomen mit genau zwei benachbarten O-Atomen) im Vergleich zu der Easy-to-clean-Beschichtung.

Vermutlich ist die Erhöhung des Anteils an sekundären Silicium-Atomen ein Grund für die erhöhte Elastizität und Flexibilität der erfindungsgemäßen Beschichtungen im Vergleich mit der Easy-to-clean-Beschichtung gemäß DE 101 31 156 A1, bei der eine stärkere Dominanz von tertiären Silicium-Atomen vorliegt.

Aus dem Vergleich der ESCA-Spektren der erfindungsgemäßen und der Easy-to-clean-Beschichtung ergibt sich, dass die mechanischen Eigenschaften Elastizität und Flexibilität direkt verknüpft sind mit der Struktur des jeweiligen Plasmapolymers.

Die erfindungsgemäße Beschichtung ist kohlenstoffreicher und sauerstoffärmer als die Easy-to-clean-Beschichtung. Damit ergeben sich zwangsläufig weniger Vernetzungspunkte. Die Zusammensetzung nähert sich der eines Silikonöles an, ist aber gegenüber diesem, ebenso wie gegenüber klassischen Silikonelastomeren, stärker vernetzt (mehr Sauerstoff, weniger Kohlenstoff). Deshalb kann man von einer elastomeren plasmapolymeren Struktur ausgehen (bei hohem Wasserstoffgehalt).

## Patentansprüche

1. Artikel umfassend oder bestehend aus einem plasmapolymeren Produkt, bestehend aus Kohlenstoff, Silicium, Sauerstoff und Wasserstoff sowie gegebenenfalls üblichen Verunreinigungen, wobei im ESCA-Spektrum des plasmapolymeren Produktes, bei Kalibrierung auf den aliphatischen Anteil des C 1s Peaks bei 285,00 eV, im Vergleich mit einem trimethylsiloxy-terminierten Polydimethylsiloxan (PDMS) mit einer kinematischen Viskosität von 350 mm²/s bei 25 °C und einer Dichte von 0,97 g/mL bei 25 °C,
der Si 2p Peak einen Bindungsenergiewert besitzt, der um maximal 0,44 eV zu höheren oder niedrigeren Bindungsenergien verschoben ist, und
der O 1s Peak einen Bindungsenergiewert besitzt, der um maximal 0,50 eV zu höheren oder niedrigeren Bindungsenergien verschoben ist.

2. Artikel nach Anspruch 1, wobei
der Si 2p Peak einen Bindungsenergiewert besitzt, der um maximal 0,40 eV zu höheren oder niedrigeren Bindungsenergien verschoben ist, und
der O 1s Peak einen Bindungsenergiewert besitzt, der um maximal 0,40 eV zu höheren oder niedrigeren Bindungsenergien verschoben ist.

3. Artikel nach einem der vorangehenden Ansprüche, wobei für die Stoffmengenverhältnisse in dem plasmapolymeren Produkt gilt:
| | | |
|---|---|---|
| 0,75 | < n(O) : n(Si) < | 1,25 |
| 1,50 | < n(C) : n(Si) < | 2,50 |
| 1,50 | < n(C), n(O) < | 2,50 |
| 2,25 | < n(H) : n(C) < | 3,00. |

4. Artikel nach Anspruch 3, wobei für die Stoffmengenverhättnisse in dem plasmapolymeren Produkt gilt
| | | |
|---|---|---|
| 1,00 | < n(O) : n(Si) < | 1,25 |
| 2,00 | < n(C): n(Si) < | 2,50 |
| 1,60 | < n(C) ; n(O) < | 2,30 |
| 2,40 | < n(H) : n(C) < | 3,00. |

5. Artikel nach Anspruch 4, wobei für die Stoffmengenverhättnisse in dem plasmapolymeren Produkt gilt;
| | | |
|---|---|---|
| 1,05 | < n(O) : n(Si) < | 1,23 |
| 2,10 | < n(C) : n(Si) < | 2,23 |
| 1,70 | < n(C) : n(O) < | 2,00 |
| 2,60 | < n(H) : n(C) < | 3,00. |

6. Artikel nach einem der vorangehenden Ansprüche, wobei das plasmapolymere Produkt, bezogen auf 100 Atom-% für die Summe der Elemente Silicium, Sauerstoff und Kohlenstoff, enthält:
| | |
|---|---|
| Silicium | 22 bis 28 Atom-% |
| Sauerstoff | 22 bis 30 Atom-% |
| Kohlenstoff | 42 bis 55 Atom-%. |

7. Artikel nach einem der vorangehenden Ansprüche, wobei das plasmapolymere Produkt, bezogen auf 100 Atom-% für die Summe der Elemente Silicium, Sauerstoff und Kohlenstoff, enthält:
| | |
|---|---|
| Silicium | 22 bis 26 Atom-% |
| Sauerstoff | 24 bis 29 Atom-% |
| Kohlenstoff | 47 bis 51 Atom-%. |

8. Artikel nach einem der Ansprüche 1 bis 4 oder 6,
wobei das plasmapolymere Produkt, bezogen auf 100 Atom-% für die Summe der Elemente Silicium, Sauerstoff und Kohlenstoff, enthält:
| | |
|---|---|
| Silicium | 22 bis 28 Atom-% |
| Sauerstoff | 22 bis 30 Atom-% |
| Kohlenstoff | 42 bis 55 Atom-%, |
wobei für die Staffmengenverhältnisse in dem plasmapolymeren Produkt gilt:
| | | |
|---|---|---|
| 0,75 | < n(O) : n(Si) < | 1,25 |
| 1,50 | < n(C) : n(Si) < | 2,50 |
| 1,50 | < n(C): n(O) < | 2,50 |
| 2,25 | < n(H) : n(C) < | 3,00 und |
und
wobei im ESCA-Spektrum des plasmapolymeren Produktes, im Vergleich mit einem trimethylsiloxy-terminierten Polydimethylsiloxan (PDMS) mit einer kinematischen Viskosität von 350 mm²/s bei 25 °C und einer Dichte von 0,97 g/mL bei 25 °C,
der Si 2p Peak einen Bindungsenergiewert besitzt, der um maximal 0,44 eV zu höheren oder niedrigeren Bindungsenergien verschoben ist, und
der O 1s Peak einen Bindungsenergiewert besitzt, der um maximal 0,50 eV zu höheren oder niedrigeren Bindungsenergien verschoben ist.

9. Artikel nach einem der Ansprüche 1 bis 4 oder 6 bis 8,
wobei das plasmapolymere Produkt, bezogen auf 100 Atom-% für die Summe der Elemente Silicium, Sauerstoff und Kohlenstoff, enthält:
| | |
|---|---|
| Silicium | 22 bis 26 Atom-% |
| Sauerstoff | 24 bis 29 Atom-% |
| Kohlenstoff | 47 bis 51 Atom-%, |
wobei für die Stofimengenverhältnisse in dem plasma polymeren Produkt gilt:
| | | |
|---|---|---|
| 1,00 | < n(O) : n(Si) < | 1,25 |
| 2,00 | < n(C) : n(Si) < | 2,50 |
| 1,60 | < n(C) : n(O) < | 2,30 |
| 2,40 | < n(H) : n(C) < | 3,00 |
und
wobei
der Si 2p Peak einen Bindungsenergiewert besitzt, der um maximal 0,40 eV zu höheren oder niedrigeren Bindungsenergien verschoben ist, und
der O 1s Peak einen Bindungsenergiewert besitzt, der um maximal 0,40 eV zu höheren oder niedrigeren Bindungsenergien verschoben ist

10. Artikel nach einem der vorangehenden Ansprüche, wobei (i) der Artikel aus dem plasma polymeren Produkt besteht und eine Beschichtung oder ein Teil einer Beschichtung oder eine Folie ist oder (ii) ein Verbund ist, umfassend ein Substrat sowie eine Beschichtung in Form eines vom Substrat zerstörungsfrei ablösbaren oder nicht zerstörungsfrei ablösbaren plasmapolymeren Produktes, wobei die (i) Folie vorzugsweise eine Dicke im Bereich von 20 bis 2000 nm und die (ii) Beschichtung vorzugsweise eine Dicke im Bereich von 1 bis 2000 nm besitzt.

11. Artikel nach Anspruch 10, wobei der Artikel ein Verbund ist, umfassend ein Substrat sowie eine Beschichtung mit einer Dicke im Bereich von 1 bis 2000 nm bestehend aus einem vom Substrat zerstörungsfrei ablösbaren oder nicht zerstörungsfrei ablösbaren plasmapolymeren Produkt, wobei die Beschichtung einen Durchtritt von Molekülen mit einer Molmasse von 100 g/mol oder mehr, vorzugsweise 50 g/mol oder mehr, nicht erlaubt.

12. Artikel nach einem der vorangehenden Ansprüche, wobei der Artikel ein Verbund ist umfassend ein Substrat sowie eine darauf angeordnete Beschichtung mit einer Dicke im Bereich von 1 bis 2000 nm bestehend aus einem vom Substrat zerstörungsfrei ablösbaren oder nicht zerstörungsfrei ablösbaren plasmapolymeren Produkt, wobei das Substrat ein Elastomer ist.

13. Artikel nach einem der vorangegangen Ansprüche 10 bis 12, wobei das Substrat selbst ein
- plasmapolymeres Produkt, insbesondere eine plasmapolymere Schicht auf einem Basissubstrat, ist
- eine Schicht ist, welche mit PVD, CVD, plasmaunterstützter CVD (PE-CVD), galvanisch oder mit Hilfe einer Sol-Gel-Technik auf ein Basissubstrat aufgebracht wurde.

14. Artikel nach einem der vorangehenden Ansprüche, wobei der Artikel ausgewählt ist aus der Gruppe bestehend aus:
- Artikel mit einer Migrationssperre gegenüber Molekülen mit einer Molmasse von 100 g/mol oder mehr, vorzugsweise 50 g/mol oder mehr, umfassend ein plasmapolymeres Produkt wie in einem der vorangehenden Ansprüche definiert als Migrationssperre oder Teil der Migrationssperre,
- Artikel mit einer Dichtung, umfassend ein plasmapolymeres Produkt wie in einem der vorangehenden Ansprüche definiert als Dichtung oder Dichtungsbestandteil,
- optisches Element mit einer Beschichtung, umfassend ein plasmapolymeres Produkt wie in einem der vorangehenden Ansprüche definiert als Beschichtungsmaterial,
- Artikel umfassend ein korrosionsempfindliches Substrat und eine darauf angeordnete Korrosionsschutzbeschichtung, umfassend ein plasmapolymeres Produkt wie in einem der vorangehenden Ansprüche definiert als Korrosionsschutzbeschichtung oder Teil der Korrosionsschutzbeschichtung,
- Artikel umfassend ein Substrat mit Easy-to-Clean-Beschichtung, umfassend ein plasmapolymeres Produkt wie in einem der vorangehenden Ansprüche definiert als Easy-to-Clean-Beschichtung oder Teil der Easy-to-Clean-Beschichtung, insbesondere für die Anwendung im Bereich der Klebstoffverarbeitung,
- Artikel umfassend ein Substrat insbesondere auch ein (technisches)Textil mit (hydrolysebeständiger) Easy-to-Clean-Beschichtung, umfassend ein plasmapolymeres Produkt wie in einem der vorangehenden Ansprüche definiert als (hydrolysebeständige) Easy-to-Clean-Beschichtung oder Teil der (hydrolysebeständigen) Easy-to-Clean-Beschichtung,
- Artikel umfassend ein Substrat (insbesondere auch ein Membran) mit (hydrolysebeständiger) Easy-to-Clean-Beschichtung bzw. Hydrophobausrüstung, umfassend ein plasmapolymeres Produkt wie in einem der vorangehenden Ansprüche definiert als (hydrolysebeständige) Easy-to-Clean - Beschichtung bzw. Hydrophobausrüstung oder Teil der (hydrolysebeständigen) Easy-to-Clean-Beschichtung bzw. Hydrophobausrüstung,
- Artikel umfassend ein Substrat mit einer antibakteriellen Beschichtung, umfassend ein plasmapolymeres Produkt wie in einem der vorangehenden Ansprüche definiert als Teil einer antibakteriellen Beschichtung, insbesondere einer nicht zytotoxischen antibakteriellen Beschichtung,
- Artikel umfassend ein Substrat zur Herstellung einer Verpackung mit einer antibakteriellen Beschichtung, umfassend ein plasmapolymeres Produkt wie in einem der vorangehenden Ansprüche definiert als Teil einer antibakteriellen Beschichtung, insbesondere einer nicht zytotoxischen antibakteriellen Beschichtung,
- Artikel umfassend ein Substrat mit plasmapolymerer Trennschicht, umfassend ein plasmapolymeres Produkt wie in einem der vorangegangenen Ansprüche definiert als Trennschicht oder Teil der Trennschicht.
- Artikel umfassend ein Elastomerprodukt und eine die Gleitfähigkeit erhöhende Beschichtung auf dem Elastomerprodukt, umfassend ein plasmapolymeres Produkt wie in einem der vorangehenden Ansprüche definiert als Beschichtung oder Bestandteil der Beschichtung,
- Artikel umfassend ein Substrat, insbesondere eine lithographische Anlage, und eine darauf angeordnete, rückstandsfrei entfernbare, vorzugsweise rückstandsfrei abziehbare Schutzfolie, umfassend ein plasmapolymeres Produkt wie in einem der vorangehenden Ansprüche definiert als Schutzfolie oder Bestandteil der Schutzfolie,
- Artikel umfassend ein Substrat, insbesondere ein Wärmetauscher oder Teile eines Wärmetauschers, und eine darauf angeordnete Beschichtung, umfassend ein plasmapolymeres Produkt wie in einem der vorangehenden Ansprüche definiert mit stark hydrophoben, hydrolysestabilen Oberflächeneigenschaften, welches die Wärmeleitfähigkeit nur kaum messbar verändert.
- Artikel umfassend ein Substrat, insbesondere eine optische Komponente einer lithographischen Anlage, und eine darauf angeordnete Beschichtung, umfassend ein plasmapolymeres Produkt wie in einem der vorangehenden Ansprüche definiert als hydrolysebeständige, stark hydrophobe und weitgehend UV-transparente Schutzschicht.
- Artikel umfassend eine vorzugsweise plasmapolymere Beschichtung mit einem Defekt und eine Reparaturfolie zur Reparatur des Defektes, umfassend ein plasmapolymeres Produkt wie in einem der vorangehenden Ansprüche definiert als Reparaturfolie oder Bestandteil der Reparaturfolie,
- Artikel umfassend mindestens zwei härtere Schichten oder Substrate, vorzugsweise mit Barriereeigenschaften, und mindestens eine weiche Spacerschicht zwischen den härteren Schichten oder Substraten, umfassend ein plasmapolymeres Produkt wie in einem der vorangehenden Ansprüche definiert als Spacerschicht oder Bestandteil der Spacerschicht,
- Artikel umfassend eine Barrierebeschichtung oder ein Substrat zur Verringerung der Migration von Gasen und Dämpfen, insbesondere Wasserdampf, Kohlendioxid oder Sauerstoff, mit einer hydrophoben Deckschicht, umfassend ein plasmapolymeres Produkt wie in einem der vorangehenden Ansprüche definiert als Deckschicht oder Bestandteil der Deckschicht.
- Artikel umfassend ein vorzugsweise elektrisches Bauelement und eine elektrisch isolierende Folie oder -beschichtung, umfassend ein plasmapolymeres Produkt wie in einem der vorangehenden Ansprüche definiert als isolierende Folie oder isolierende Beschichtung oder Teil einer solchen Folie oder Beschichtung.
- Artikel umfassend einen vorzugsweise implantierbaren medizintechnischen Gegenstand umfassend ein plasmapolymeres Produkt wie in einem der vorangehenden Ansprüche definiert,
- Vorzugsweise implantierbarer medizintechnischer Silikon-Artikel, umfassend als Beschichtung ein plasmapolymeres Produkt wie in einem der vorangehenden Ansprüche definiert.

15. Verwendung eines plasmapolymeren Produktes wie in einem der vorangehenden Ansprüche definiert, als
- Migrationssperre gegenüber Molekülen mit einer Molmasse von 100 g/mol oder mehr, vorzugsweise 50 g/mol oder mehr,
- Deckschicht auf einer Barrierebeschichtung oder einem Substrat zur Verringerung der Migration von Gasen und Dämpfen, insbesondere Wasserdampf, Kohlendioxid oder Sauerstoff,
- Dichtungsmaterial, insbesondere für Dichtungen mit einer Dicke von maximal 1000 nm,
- flexible Beschichtung eines flexiblen Verpackungsmaterials,
- Beschichtung zur Vergütung optischer Elemente,
- hydrolysebeständige Beschichtung,
- hydrophobe Beschichtung,
- Korrosionsschutzbeschichtung,
- Easy-to-Clean-Beschichtung,
- die Gleitfähigkeit erhöhende Beschichtung auf einem Elastomerprodukt
- Schutz-, UV-transparente und/oder hydrolysestabile Folie insbesondere für für optische Elemente von lithographischen Anlagen, weiterhin bevorzugt für optische Elemente von limmersions-lithographischen Anlagen,
- Trennschicht oder Teil einer Trennschicht
- Reparaturfolie, insbesondere für Easy-to-Clean oder Trennschichtanwendungen,
- Folie oder Beschichtung mit dehäsiven und adhäsiven Oberflächeneigenschaften,
- Folie mit Loch- und/oder Streifenmuster, insbesondere zur Beschichtung hydrophiler Substrate zur Herstellung von lokalen Hydrophil- bzw. Hydrophobbereichen.
- weiche Spacerschicht zwischen härteren, voneinander zu separierenden Schichten oder Substraten, insbesondere Barriereschichten,
- stark hydrophobe Deckschicht, insbesondere zur Verhinderung der Adsorption von polaren Molekülen oder zur Verbesserung der Barriereeigenschaften von Barrierebeschichtungen, bzw. Ultra-Barrierebeschichtungen gegenüber Gasen und Dämpfen wie Wasserdampf, Kohlendioxid oder Sauerstoff,
- Trennschicht bzw. stark hydrophobe Schicht auf diamantähnlichen Beschichtungen, insbesondere dünnen, chemisch angebundenen Beschichtungen
- Isolatorfolie oder -beschichtung insbesondere in elektrischen Bauelementen.

## Claims

1. Item comprising or consisting of a plasma polymer product, consisting of carbon, silicon, oxygen and hydrogen and optionally the normal impurities, whereby in the ESCA spectrum of the plasma polymer product, with calibration to the aliphatic portion of the C1 s peak at 285.00 eV, in comparison with a trimethylsiloxy-terminated polydimethylsiloxane (PDMS) with a kinematic viscosity of 350 mm²/s at 25°C and a density of 0.97 g/ml at 25°C,
the Si 2p peak has a bond energy value that is shifted by 0.44 eV at most to higher or lower bond energies, and
the O 1s peak has a bond energy value that is shifted by 0.50 eV at most to higher or lower bond energies.

2. Item in accordance with claim 1, whereby
the Si 2p peak has a bond energy value that is shifted by 0 40 eV at most to higher or lower bond energies, and
the O 1s peak has a bond energy value that is shifted by 0.40 eV at most to higher or lower bond energies.

3. Item in accordance with one of the preceding claims, whereby for the substance quantity ratios in the plasma polymer product the following applies:
| | | |
|---|---|---|
| 0.75 | < n(O) : n(Si) < | 1.25 |
| 1.50 | < n(C) : n(Si) < | 2.50 |
| 1.50 | < n(C) : n(O) < | 2.50 |
| 2.25 | < n(H) : n(C) < | 3.00 |

4. Item in accordance with claim 3, whereby for the substance quantity ratios in the plasma polymer product the following applies:
| | | |
|---|---|---|
| 1.00 | < n(O) : n(Si) < | 1.25 |
| 2.00 | < n(C) : n(Si) < | 2.50 |
| 1.60 | < n(C) : n(O) < | 2.30 |
| 2.40 | < n(H) : n(C) < | 3.00 |

5. Item in accordance with claim 4, whereby for the substance quantity ratios in the plasma polymer product the following applies:
| | | |
|---|---|---|
| 1.05 | < n(O) : n(Si) < | 1.23 |
| 2.10 | < n(C) : n(Si) < | 2.23 |
| 1.70 | < n(C) : n(O) < | 2.00 |
| 2.60 | < n(H) : n(C) < | 3.00 |

6. Item in accordance with one of the preceding claims, whereby the plasma polymer product, in relation to 100 atom % for the total of the elements silicon, oxygen and carbon, contains:
| | |
|---|---|
| silicon | 22 to 28 atom % |
| oxygen | 22 to 30 atom % |
| carbon | 42 to 55 atom %. |

7. Item in accordance with one of the preceding claims, whereby the plasma polymer product, in relation to 100 atom % for the total of the elements silicon, oxygen and carbon, contains:
| | |
|---|---|
| silicon | 22 to 26 atom % |
| oxygen | 24 to 29 atom % |
| carbon | 47 to 51 atom %. |

8. Item in accordance with one of claims 1 to 4 or 6,
whereby the plasma polymer product, in relation to 100 atom % for the total of the elements silicon, oxygen and carbon, contains:
| | |
|---|---|
| silicon | 22 to 28 atom % |
| oxygen | 22 to 30 atom % |
| carbon | 42 to 55 atom %, |
whereby for the substance quantity ratios in the plasma polymer product the following applies:
| | | |
|---|---|---|
| 0.75 | < n(O) : n(Si) < | 1.25 |
| 1.50 | < n(C) : n(Si) < | 2.50 |
| 1.50 | < n(C) : n(O) < | 2.50 |
| 2.25 | < n(H) : n(C) < | 3.00 |
and
whereby in the ESCA spectrum of the plasma polymer product, in comparison with a trimethylsiloxy-terminated polydimethylsiloxane (PDMS) with a kinematic viscosity of 350 mm²/s at 25°C and a density of 0.97 g/ml at 25°C,
the Si 2p peak has a bond energy value that is shifted by 0.44 eV at most to higher or lower bond energies, and
the O 1s peak has a bond energy value that is shifted by 0.50 eV at most to higher or lower bond energies.

9. Item in accordance with one of claims 1 to 4 or 6 to 8,
whereby the plasma polymer product, in relation to 100 atom % for the total of the elements silicon, oxygen and carbon, contains:
| | |
|---|---|
| silicon | 22 to 26 atom % |
| oxygen | 24 to 29 atom % |
| carbon | 47 to 51 atom %, |
whereby for the substance quantity ratios in the plasma polymer product the following applies:
| | | |
|---|---|---|
| 1.00 | < n(O) : n(Si) < | 1.25 |
| 2.00 | < n(C) : n(Si) < | 2.50 |
| 1.60 | < n(C) : n(O) < | 2.30 |
| 2.40 | < n(H) : n(C) < | 3.00 |
and
whereby
the Si 2p peak has a bond energy value that is shifted by 0.40 eV at most to higher or lower bond energies, and
the O 1s peak has a bond energy value that is shifted by 0.40 eV at most to higher or lower bond energies.

10. Item in accordance with one of the preceding claims, whereby (i) the item consists of the plasma polymer product and is a coating or a part of a coating or a foil, or (ii) is a composite, comprising a substrate and a coating in the form of a plasma polymer product that can be pulled off from the substrate non-destructively or not non-destructively, whereby the (i) foil preferably has a thickness in the range 20 to 2,000 nm and (ii) the coating preferably has a thickness in the range 1 to 2,000 nm.

11. Item in accordance with claim 10, whereby the item is a composite comprising a substrate and a coating with a thickness in the range 1 to 2,000 nm, consisting of a plasma polymer product that can be pulled off from the substrate non-destructively or not non-destructively, whereby the coating does not allow the passage of molecules with a molar mass of 100 g/mol or more, preferably 50 g/mol or more.

12. Item in accordance with one of the preceding claims, whereby the item is a composite comprising a substrate and a coating arranged thereon with a thickness in the range 1 to 2,000 nm consisting of a plasma polymer product that can be pulled off from the substrate non-destructively or not non-destructively, whereby the substrate is an elastomer.

13. Item in accordance with one of the preceding claims 10 to 12, whereby the substrate itself is a
- plasma polymer product, in particular a plasma polymer layer on a base substrate;
- layer which has been applied with PVD, CVD, plasma enhanced CVD (PE-CVD), galvanically or with the help of a sol-gel method to a base substrate.

14. Item in accordance with one of the preceding claims, whereby the item is selected from the group consisting of:
- items with a migration block against molecules with a molar mass of 100 g/mol or more, preferably 50 g/mol or more, comprising a plasma polymer product as defined in one of the preceding claims as the migration block or part of the migration block;
- items with a seal, comprising a plasma polymer product as defined in one of the preceding claims as a seal or seal component;
- optical element with a coating, comprising a plasma polymer product as defined in one of the preceding claims as a coating material;
- items comprising a corrosion-sensitive substrate and a corrosion protection coating arranged upon this, comprising a plasma polymer product as defined in one of the preceding claims as the corrosion protection coating or part of the corrosion protection coating;
- items comprising a substrate with easy-to-clean coating, comprising a plasma polymer product as defined in one of the preceding claims as the easy-to-clean coating or part of the easy-to-clean coating, in particular for the application in the area of adhesive processing;
- items comprising a substrate, in particular also a (technical) textile, with easy-to-clean coating (that is stable to hydrolysis), comprising a plasma polymer product as defined in one of the preceding claims as the easy-to-clean coating (that is stable to hydrolysis) or part of the easy-to-clean coating (that is stable to hydrolysis);
- items comprising a substrate (in particular also a membrane) with a hydrophobic finish or an easy-to-clean coating (that is stable to hydrolysis), comprising a plasma polymer product as defined in one of the preceding claims as the hydrophobic finish or easy-to-clean coating (that is stable to hydrolysis) or part of the hydrophobic finish or easy-to-clean coating (that is stable to hydrolysis);
- items comprising a substrate with an antibacterial coating, comprising a plasma polymer product as defined in one of the preceding claims as part of an antibacterial coating, in particular a non-cytotoxic antibacterial coating;
- items comprising a substrate for the manufacture of a packaging with an antibacterial coating, comprising a plasma polymer product as defined in one of the preceding claims as part of an antibacterial coating, in particular a non-cytotoxic antibacterial coating,
- items comprising a substrate with plasma polymer separating layer, comprising a plasma polymer product as defined in one of the preceding claims as the separating layer or part of the separating layer;
- items comprising an elastomer product and a coating that increases the sliding ability on the elastomer product, containing a plasma polymer product as defined in one of the preceding claims as the coating or a component of the coating;
- items comprising a substrate, in particular a lithographic system, and a protective foil which can be removed without residue, and preferably can be pulled off without residue, arranged on this, comprising a plasma polymer product as defined in one of the preceding claims as the protective foil or part of the protective foil;
- items comprising a substrate, in particular a heat exchanger or parts of a heat exchanger, and a coating arranged on this, comprising a plasma polymer product as defined in one of the preceding claims with strongly hydrophobic surface characteristics which are stable to hydrolysis, which changes the thermal conductivity in a manner which is scarcely measurable;
- items comprising a substrate, in particular an optical component of a lithographic system, and a coating, comprising a plasma polymer product as defined in one of the preceding claims, arranged on this as the hydrolysis-resistant, strongly hydrophobic and largely UV-transparent protective coating;
- items comprising a preferably plasma polymer coating with a defect and a repair foil for repairing the defect, comprising a plasma polymer product as defined in one of the preceding claims as the repair foil or part of the repair foil;
- items comprising at least two harder layers or substrates, preferably with barrier characteristics, and at least one soft spacer layer between the harder layers or substrates, comprising a plasma polymer product as defined in one of the preceding claims as the spacer layer or component of the spacer layer;
- items comprising a barrier coating or a substrate to reduce the migration of gases and vapours, in particular steam, carbon dioxide or oxygen, with a hydrophobic covering layer, comprising a plasma polymer product as defined in one of the preceding claims as the covering layer or component of the covering layer;
- items comprising a preferably electrical component and an electrically insulating foil or coating, comprising a plasma polymer product as defined in one of the preceding claims as the insulating foil or insulating coating or part of such a foil or coating;
- items containing a preferably implantable medical engineering object comprising a plasma polymer product as defined in one of the preceding claims;
- preferably implantable medical engineering silicone items, comprising as a coating a plasma polymer product as defined in one of the preceding claims.

15. Use of a plasma polymer product as defined in one of the preceding claims, as
- migration block against molecules with a molar mass of 100 g/mol or more, preferably 50 g/mol or morse;
- covering layer on a barrier coating or a substrate in order to reduce the migration of gases and vapours, in particular steam, carbon dioxide or oxygen;
- sealing material, in particular for seals with a maximum thickness of 1,000 nm;
- flexible coating of a flexible packaging material;
- coating to treat optical elements;
- coating that is stable to hydrolysis;
- hydrophobic coating;
- corrosion protection coating;
- easy-to-clean coating;
- coating of an elastomer product to increase the sliding ability;
- protective, UV-transparent and/or hydrolysis-stable foil, in particular for for [sic] optical elements of lithographic systems, with further preference for optical elements of immersion lithography systems;
- separating layer or part of a separating layer;
- repair foil, in particular for easy-to-clean or separating layer applications;
- foil or coating with dehesive and adhesive surface characteristics;
- foil with a holed and/or striated pattern, in particular for the coating of hydrophilic substrates for the manufacture of local hydrophilic or hydrophobic areas;
- soft spacer layer between harder layers or substrates that have to be separated from each other, in particular barrier layers;
- strongly hydrophobic covering layer, in particular for preventing the adsorption of polar molecules or to improve the barrier characteristics of barrier coatings or ultra-barrier coatings against gases and vapours such as steam, carbon dioxide or oxygen;
- separating layer or strongly hydrophobic layer on diamond-like coatings, in particular thin chemically bonded coatings.
- insulator foil or coating, in particular in electrical components.

## Revendications

1. Article comportant ou se composant d'un produit polymère de plasma qui se compose de carbone, de silicium, d'oxygène et d'hydrogène ainsi que des impuretés habituelles le cas échéant,
le pic Si 2p possédant une énergie de liaison, dont la valeur est modifiée de 0,44 eV au maximum par rapport à des énergies de liaison supérieures ou inférieures et le pic O 1 s possédant une énergie de liaison, dont la valeur est modifiée de 0,50 eV au maximum par rapport à des énergies de liaison supérieures ou inférieures, dans le spectre ESCA du produit polymère de plasma dans le cas d'un calibrage sur la proportion aliphatique du pic C 1 s dans le cas d'une énergie de 285,00 eV, en comparaison à un polydiméthylsiloxane terminé triméthylsiloxy (PDMS) présentant une viscosité cinématique de 350 mm²/s à 25°C et une densité de 0,97 g/mL à 25°C.

2. Article selon la revendication 1, dans lequel
le pic Si 2p possède une énergie de liaison, dont la valeur est modifiée de 0,40 eV au maximum par rapport à des énergies de liaison supérieures ou inférieures, et
le pic O 1s possède une énergie de liaison, dont la valeur est modifiée de 0,40 eV au maximum par rapport à des énergies de liaison supérieures ou inférieures.

3. Article selon l'une des revendications précédentes, dans lequel les rapports de quantité de substance dans le produit polymère de plasma sont de
| | | |
|---|---|---|
| 0,75 | <n(O): n(Si) < | 1,25 |
| 1,50 | <n(C) : n(Si) < | 2,50 |
| 1,50 | <n(C) : n(O) < | 2,50 |
| 2,25 | <n(H): n(C) < | 3,00. |

4. Article selon la revendication 3, dans lequel les rapports de quantité de substance dans le produit polymère de plasma sont de
| | | |
|---|---|---|
| 1,00 | <n(O) : n(Si) < | 1,25 |
| 2,00 | <n(C) : n(Si) < | 2,50 |
| 1,60 | <n(C) : n(O) < | 2,30 |
| 2,40 | <n(H) : n(C) < | 3,00. |

5. Article selon la revendication 4, dans lequel les rapports de quantité de substance dans le produit polymère de plasma sont de
| | | |
|---|---|---|
| 1,05 | <n(O) : n(Si) < | 1,23 |
| 2,10 | <n(C): n(Si) < | 2,23 |
| 1,70 | <n(C) : n(O) < | 2,00 |
| 2,60 | <n(H) : n(C) < | 3,00. |

6. Article selon l'une des revendications précédentes, dans lequel le produit polymère de plasma contient pour la somme des éléments de silicium, d'oxygène et de carbone, par rapport à 100 % d'atomes :
| |
|---|
| 22 à 28 % d'atomes de silicium |
| 22 à 30 % d'atomes d'oxygène |
| 42 à 55 % d'atomes de carbone. |

7. Article selon l'une des revendications précédentes, dans lequel le produit polymère de plasma contient pour la somme des éléments de silicium, d'oxygène et de carbone, par rapport à 100 % d'atomes :
| |
|---|
| 22 à 26 % d'atomes de silicium |
| 24 à 29 % d'atomes d'oxygène |
| 47 à 51 % d'atomes de carbone. |

8. Article selon l'une des revendications 1 à 4 ou 6, dans lequel le produit polymère de plasma contient pour la somme des éléments de silicium, d'oxygène et de carbone, par rapport à 100 % d'atomes :
| |
|---|
| 22 à 28 % d'atomes de silicium |
| 22 à 30 % d'atomes d'oxygène |
| 42 à 55 % d'atomes de carbone, |
les rapports de quantité de substance dans le produit polymère de plasma étant de
| | | |
|---|---|---|
| 0,75 | <n(O) : n(Si) < | 1,25 |
| 1,50 | <n(C) : n(Si) < | 2,50 |
| 1,50 | <n(C) : n(O) < | 2,50 |
| 2,25 | <n(H) : n(C) < | 3,00 |
et
le pic Si 2p possédant une énergie de liaison, dont la valeur est modifiée de 0,44 eV au maximum par rapport à des énergies de liaison supérieures ou inférieures et
le pic O 1s possédant une énergie de liaison, dont la valeur est modifiée de 0,50 eV au maximum par rapport à des énergies de liaison supérieures ou inférieures,
dans le spectre ESCA du produit polymère de plasma en comparaison à un polydiméthylsiloxane terminé triméthylsiloxy (PDMS) présentant une viscosité cinématique de 350 mm²/s à 25°C et une densité de 0,97 g/mL à 25°C.

9. Article selon l'une des revendications 1 à 4 ou 6 à 8, dans lequel le produit polymère de plasma contient pour la somme des éléments de silicium, d'oxygène et de carbone, par rapport à 100 % d'atomes :
| |
|---|
| 22 à 26 % d'atomes de silicium |
| 24 à 29 % d'atomes d'oxygène |
| 47 à 51 % d'atomes de carbone, |
les rapports de quantité de substance dans le produit polymère de plasma étant de
| | | |
|---|---|---|
| 1,00 | <n(O) : n(Si) < | 1,25 |
| 2,00 | <n(C) : n(Si) < | 2,50 |
| 1,60 | <n(C) : n(O) < | 2,30 |
| 2,40 | <n(H) : n(C) < | 3,00 |
et
le pic Si 2p possédant une énergie de liaison, dont la valeur est modifiée de 0,40 eV au maximum par rapport à des énergies de liaison supérieures ou inférieures et
le pic O 1s possédant une énergie de liaison, dont la valeur est modifiée de 0,40 eV au maximum par rapport à des énergies de liaison supérieures ou inférieures.

10. Article selon l'une des revendications précédentes, dans lequel (i) l'article est composé du produit polymère de plasma et étant un revêtement ou une partie de revêtement ou un film ou (ii) un composite, comprenant un substrat ainsi qu'un revêtement sous forme d'un produit polymère de plasma pouvant être libéré du substrat sans entraîner d'altération ou ne pouvant pas être libéré du substrat sans entraîner d'altération, dans lequel (i) le film possède de préférence une épaisseur située dans une plage comprise entre 20 et 2000 nm et (ii) le revêtement possédant de préférence une épaisseur située dans une plage comprise entre 1 et 2000 nm.

11. Article selon la revendication 10, dans lequel l'article est un composite comprenant un substrat ainsi qu'un revêtement ayant une épaisseur située dans une plage comprise entre 1 et 2000 nm se composant d'un produit polymère de plasma pouvant être libéré du substrat sans entraîner d'altération ou ne pouvant pas être libéré du substrat sans entraîner d'altération, le revêtement ne permettant pas le passage de molécules ayant une masse molaire de 100 g/mol ou plus, de préférence de 50 g/mol ou plus.

12. Article selon l'une des revendications précédentes, dans lequel l'article est un composite comprenant un substrat ainsi qu'un revêtement disposé sur celui-ci ayant une épaisseur située dans une plage comprise entre 1 et 2000 nm composé d'un produit polymère de plasma pouvant être libéré du substrat sans entraîner d'altération ou ne pouvant pas être libéré du substrat sans entraîner d'altération, le substrat étant un élastomère.

13. Article selon l'une des revendications précédentes 10 à 12, dans lequel le substrat est lui-même
- un produit polymère de plasma, notamment une couche polymère de plasma sur un substrat de base,
- une couche qui a été appliquée sur un substrat de base par PVD, CVD, CVD assisté par plasma (PE-CVD), galvaniquement ou à l'aide d'une technique sol-gel.

14. Article selon l'une des revendications précédentes, dans lequel l'article est sélectionné parmi un groupe composé de :
- un article comportant une inhibition de migration contre les molécules ayant une masse molaire de 100 g/mol ou plus, de préférence de 50 g/mol ou plus, comprenant un produit polymère de plasma tel que défini dans l'une des revendications précédentes en tant qu'inhibition de migration ou partie d'inhibition de migration,
- un article comportant un joint, comprenant un produit polymère de plasma tel que défini dans l'une des revendications précédentes en tant que joint ou élément de joint,
- un élément optique comportant un revêtement, comprenant un produit polymère de plasma tel que défini dans l'une des revendications précédentes en tant que matériau de revêtement,
- un article comprenant un substrat sensible à la corrosion et un revêtement de protection contre la corrosion disposé sur ledit substrat, comprenant un produit polymère de plasma tel que défini dans l'une des revendications précédentes en tant que revêtement de protection contre la corrosion ou partie du revêtement de protection contre la corrosion,
- un article comprenant un substrat avec un revêtement Easy-to-Clean, comprenant un produit polymère de plasma tel que défini dans l'une des revendications précédentes en tant que revêtement Easy-to-Clean ou partie du revêtement Easy-to-Clean, notamment pour l'application dans le domaine du traitement des adhésifs,
- un article comprenant un substrat, notamment aussi un textile (technique), avec un revêtement Easy-to-Clean (résistant à l'hydrolyse), comprenant un produit polymère de plasma tel que défini dans l'une des revendications précédentes en tant que revêtement Easy-to-Clean (résistant à l'hydrolyse) ou partie du revêtement Easy-to-Clean (résistant à l'hydrolyse),
- un article comprenant un substrat (notamment aussi une membrane) avec un revêtement Easy-to-Clean (résistant à l'hydrolyse) ou un apprêt hydrophobe, comprenant un produit polymère de plasma tel que défini dans l'une des revendications précédentes en tant que revêtement Easy-to-Clean (résistant à l'hydrolyse) ou apprêt hydrophobe, ou partie du revêtement Easy-to-Clean (résistant à l'hydrolyse) ou de l'apprêt hydrophobe,
- un article comprenant un substrat avec un revêtement antibactérien, comprenant un produit polymère de plasma tel que défini dans l'une des revendications précédentes en tant que partie d'un revêtement antibactérien, notamment d'un revêtement antibactérien non cytotoxique,
- un article comprenant un substrat destiné à la fabrication d'un emballage avec un revêtement antibactérien, comprenant un produit polymère de plasma tel que défini dans l'une des revendications précédentes en tant que partie d'un revêtement antibactérien, notamment d'un revêtement antibactérien non cytotoxique,
- un article comprenant un substrat avec une couche de séparation polymère de plasma, comprenant un produit polymère de plasma tel que défini dans l'une des revendications précédentes en tant que couche de séparation ou partie de couche de séparation,
- un article comprenant un produit élastomère et un revêtement améliorant le glissement sur le produit élastomère, comprenant un produit polymère de plasma tel que défini dans l'une des revendications précédentes en tant que revêtement ou élément du revêtement,
- un article comprenant un substrat, en particulier une unité lithographique, et un film de protection disposé sur ladite unité, pouvant être enlevé sans laisser de résidus, de préférence pouvant être retiré sans laisser de résidus, comprenant un produit polymère de plasma tel que défini dans l'une des revendications précédentes en tant que film de protection ou élément du film de protection,
- un article comprenant un substrat, en particulier un échangeur de chaleur, ou des pièces d'un échangeur de chaleur, et un revêtement disposé sur ledit échangeur ou les pièces de celui-ci, comprenant un produit polymère de plasma tel que défini dans l'une des revendications précédentes possédant des propriétés de surface fortement hydrophobes, stables à l'hydrolyse, tout en ne modifiant la conductivité thermique que de façon à peine mesurable,
- un article comprenant un substrat, en particulier un composant optique d'une unité lithographique et un revêtement disposé sur ledit composant, comprenant un produit polymère de plasma tel que défini dans l'une des revendications précédentes en tant que couche de protection résistante à l'hydrolyse, fortement hydrophobe et largement transparente aux UV,
- un article comprenant un revêtement de préférence polymère de plasma avec un défaut et un film de réparation destiné à la réparation du défaut, comprenant un produit polymère de plasma tel que défini dans l'une des revendications précédentes en tant que film de réparation ou élément du film de réparation,
- un article comprenant au moins deux couches ou substrats plus durs, de préférence possédant des propriétés de barrière et au moins une couche d'espaceur souple entre les couches ou les substrats plus durs, comprenant un produit polymère de plasma tel que défini dans l'une des revendications précédentes en tant que couche d'espaceur ou élément de la couche d'espaceur,
- un article comprenant un revêtement barrière ou un substrat destiné à la réduction de la migration de gaz et de vapeurs, notamment de la vapeur d'eau, du dioxyde de carbone ou de l'oxygène, avec une couche de recouvrement hydrophobe, comprenant un produit polymère de plasma tel que défini dans l'une des revendications précédentes en tant que couche de recouvrement ou élément de la couche de recouvrement,
- un article comprenant un composant de préférence électrique et un film ou un revêtement isolant électriquement, comprenant un produit polymère de plasma tel que défini dans l'une des revendications précédentes en tant que film isolant ou revêtement isolant ou partie d'un film ou d'un revêtement de ce type,
- un article comprenant un objet technico-médical de préférence implantable comprenant un produit polymère de plasma tel que défini dans l'une des revendications précédentes,
- un article technico-médical en silicone de préférence implantable, comprenant un produit polymère de plasma tel que défini dans l'une des revendications précédentes en tant que revêtement.

15. Utilisation d'un produit polymère de plasma tel que défini dans l'une des revendications précédentes en tant que
- inhibition de migration contre les molécules ayant une masse molaire de 100 g/mol ou plus, de préférence de 50 g/mol ou plus,
- couche de recouvrement sur un revêtement barrière ou un substrat destiné à la réduction de la migration de gaz et de vapeurs, notamment de la vapeur d'eau, du dioxyde de carbone ou de l'oxygène,
- matériau de joint, notamment pour des joints ayant une épaisseur maximum de 1 000 nm,
- revêtement flexible d'un matériau d'emballage flexible,
- revêtement servant à améliorer des éléments optiques,
- revêtement résistant à l'hydrolyse,
- revêtement hydrophobe,
- revêtement de protection contre la corrosion,
- revêtement Easy-to-Clean,
- revêtement améliorant le glissement sur un produit élastomère,
- film de protection, transparent aux UV, et/ou stable à l'hydrolyse notamment pour des éléments optiques d'unités lithographiques, en outre de préférence pour des éléments optiques d'unités lithographiques à immersion,
- couche de séparation ou partie d'une couche de séparation,
- film de réparation, notamment pour Easy-to-Clean ou applications de couche de séparation,
- film ou revêtement possédant des propriétés de surface non adhésives et adhésives,
- film avec des motifs à trous et/ou à bandes, servant notamment au revêtement de substrats hydrophiles afin de constituer des zones localement hydrophiles ou hydrophobes,
- couche d'espaceur souple entre des couches ou des substrats plus durs, séparés les uns des autres, en particulier des couches barrières,
- couche de recouvrement fortement hydrophobe, notamment destinée à empêcher l'adsorption de molécules polaires ou servant à améliorer les propriétés de barrière de revêtements barrières ou de revêtements ultra-barrières par rapport à des gaz et des vapeurs tels que la vapeur d'eau, le dioxyde de carbone ou l'oxygène,
- couche de séparation ou couche fortement hydrophobe sur des revêtements de type diamant, notamment des revêtements minces liés chimiquement,
- film ou revêtement isolant notamment dans des composants électriques.
